# EUROPÄISCHE PATENTSCHRIFT

(11) **EP 2 349 942 B1**
(45) Veröffentlichungstag und Bekanntmachung des Hinweises auf die Patenterteilung: **27.11.2019**
(21) Anmeldenummer: 09778544.8
(22) Anmeldetag: 16.09.2009
(51) Int. Cl.: C03C 10/00, C03C 3/087, C03C 3/095, C03C 3/097, C03B 27/012, F24C 15/10, H05B 3/74, C03C 8/02, C03C 8/04

(54) **TRANSPARENTE, EINGEFÄRBTE KOCHFLÄCHE MIT VERBESSERTER FARBIGER ANZEIGEFÄHIGKEIT UND VERFAHREN ZUR HERSTELLUNG EINER SOLCHEN KOCHFLÄCHE**
TRANSPARENT, DYED COOKTOP HAVING IMPROVED COLOR DISPLAY CAPABILITY, AND METHOD FOR PRODUCING SUCH A COOKTOP
SURFACE DE CUISSON TRANSPARENTE COLORÉE AYANT UNE MEILLEURE CAPACITÉ D'AFFICHAGE EN COULEUR ET PROCÉDÉ DE FABRICATION D'UNE TELLE SURFACE DE CUISSON

(30) Priorität: 07.10.2008 DE 102008050263
(43) Veröffentlichungstag der Anmeldung: 03.08.2011
(60) Teilanmeldung: 19197216.5
(73) Patentinhaber: Schott AG, 55122 Mainz (DE)
(72) Erfinder: SIEBERS, Friedrich, 55283 Nierstein (DE); SCHIFFNER, Ulrich, 55126 Mainz (DE); SCHMIDBAUER, Wolfgang, 55126 Mainz (DE); SCHÖNBERGER, Klaus, 55127 Mainz (DE)
(74) Vertreter: Herden, Andreas F.
(86) Internationale Anmeldenummer: PCT/EP2009/006683
(87) Internationale Veröffentlichungsnummer: WO 2010/040443

(56) Entgegenhaltungen:
- EP-A2- 1 465 460
- DE-A1- 19 939 787
- US-A1- 2007 004 578
- DATABASE WPI Week 199925 Thomson Scientific, London, GB; AN 1999-296403 XP002580477 & JP 11 100230 A (NIPPON ELECTRIC GLASS CO) 13. April 1999 (1999-04-13) & JP 11 100230 A (NIPPON ELECTRIC GLASS CO) 13. April 1999 (1999-04-13)
- DATABASE WPI Week 199925 Thomson Scientific, London, GB; AN 1999-296402 XP002580478 & JP 11 100229 A (NIPPON ELECTRIC GLASS CO) 13. April 1999 (1999-04-13) & JP 11 100229 A (NIPPON ELECTRIC GLASS CO) 13. April 1999 (1999-04-13)

## Beschreibung

Die Erfindung bezieht sich auf eine transparente, eingefärbte Kochfläche mit verbesserter farbiger Anzeigefähigkeit bestehend aus einer Glaskeramik mit Hochquarz-Mischkristallen als vorherrschender Kristallphase sowie auf ein Verfahren zu deren Herstellung.

Kochfelder mit einer Glaskeramikplatte als Kochfläche sind gängiger Stand der Technik. Solche Glaskeramikplatten liegen üblicherweise als ebene Platten vor oder sind dreidimensional verformt.
Glaskeramiken mit Hochquarz-Mischkristallen als vorherrschender Kristallphase werden aus kristallisierbaren Lithiumaluminiumsilikat-Gläsern hergestellt.

Die Herstellung dieser Glaskeramiken erfolgt in mehreren Stufen.

Bei der großtechnischen Herstellung von Glaskeramik wird zunächst das kristallisierbare Ausgangsglas aus einem Gemisch aus Scherben und pulverförmigen Gemengerohstoffen bei Temperaturen üblicherweise zwischen 1500 und 1650°C erschmolzen. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten der Schmelze. Auch wenn diese Stoffe fest im Glasgerüst eingebunden sind, so sind sie doch unter Sicherheits- und Umweltschutzaspekten nachteilig. So müssen bei der Rohstoffgewinnung, -aufbereitung und wegen der Verdampfung bei der Schmelze besondere Vorsichtsmaßnahmen ergriffen werden.

Neuerdings wird insbesondere der Einsatz von SnO₂ als unbedenkliches Läutermittel beschrieben. Um gute Blasenqualitäten zu erreichen, werden bei konventionellen Schmelztemperaturen (maximal ca. 1680°C) neben SnO₂ bevorzugt Halogenid-Verbindungen als zusätzliche Läutermittel eingesetzt. So wird in den japanischen Anmeldungen JP 11 100 229 A und JP 11 100 230 A der Einsatz von 0,1 - 2 Gew.-% SnO₂ und 0 -1 Gew.-% Cl beschrieben. Nach diesen Schriften wird die Einfärbung durch Zusatz von V₂O₅ als alleiniges Färbemittel erreicht.

Der Zusatz von 0,05 - 1 Gew.-% Fluor (US 2007 0004578 A1) und 0,01 - 1 Gew.-% Brom (US 2008 0026927 A1) zur Unterstützung der Läuterung mit SnO₂ wird ebenfalls offenbart. Auch in diesen Schriften sind Läutertemperaturen unterhalb 1700°C beschrieben. Das Hauptfärbemittel ist V₂O₅. Nachteilig ist der Zusatz der Halogenide, da sie bei der Schmelztemperatur stark verdampfen und dabei toxische Verbindungen, wie z.B. HF bilden.

Der Einsatz von SnO₂ in Verbindung mit Hochtemperaturläuterung oberhalb 1700°C zur Erreichung guter Blasenqualitäten wird in der DE 199 39 787 A1 beschrieben. Diese Schrift liefert aber keinen Hinweis auf das Erreichen einer guten Anzeigefähigkeit im Wellenlängenbereich ab 450 nm.

Nach dem Einschmelzen und Läutern erfährt das Glas üblicherweise eine Heißformgebung durch Walzen oder neuerdings Floaten, um Platten herzustellen. Für eine wirtschaftliche Herstellung ist zum einen eine niedrige Schmelztemperatur und eine niedrige Verarbeitungstemperatur V_{A} gewünscht, zum anderen darf das Glas bei der Formgebung keine Entglasung zeigen. Das heißt, es dürfen sich keine störenden Kristalle bilden, die in den Ausgangsgläsern und den daraus hergestellten Glaskeramiken die Festigkeit beeinträchtigen. Da die Formgebung in der Nähe der Verarbeitungstemperatur V_{A} (Viskosität 10⁴ dPas) des Glases stattfindet, muss gewährleistet sein, dass die obere Entglasungstemperatur der Schmelze in der Nähe und günstigerweise unter der Verarbeitungstemperatur liegt, um die Bildung störender Kristalle zu vermeiden.
Anschließend wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 800°C Keime, üblicherweise aus ZrO₂/TiO₂-Mischkristallen, erzeugt werden. Auch SnO₂ kann an der Keimbildung beteiligt sein. Bei anschließender Temperaturerhöhung wachsen die Hochquarz-Mischkristalle auf diesen Keimen auf. Hohe Kristallwachstumsgeschwindigkeiten, wie sie für eine wirtschaftliche, schnelle Keramisierung gewünscht sind, werden bei Temperaturen von 850 bis 950°C erreicht. Bei dieser maximalen Herstelltemperatur wird das Gefüge der Glaskeramik homogenisiert und die optischen, physikalischen und chemischen Eigenschaften der Glaskeramik eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einen Bereich von ca. 950 bis 1200°C. Mit dem Übergang von Hochquarz- zu Keatit-Mischkristallen erhöht sich der thermische Ausdehnungskoeffizient der Glaskeramik und die Transparenz verringert sich durch die mit der Vergrößerung der Kristalle einhergehende Lichtstreuung. In der Regel sind Glaskeramiken mit Keatit-Mischkristallen als Hauptphase daher transluzent oder opak und die damit verbundene Lichtstreuung wirkt sich negativ auf die Anzeigefähigkeit aus.

Eine Schlüsseleigenschaft dieser Glaskeramiken mit Hochquarz-Mischkristallen als Hauptkristallphase ist die Herstellbarkeit von Werkstoffen, die über einen äußert niedrigen Wärmeausdehnungskoeffizienten im Bereich von Raumtemperatur bis 700°C und darüber von < 0,5 × 10⁻⁶/K verfügen. Aufgrund der niedrigen thermischen Ausdehnung besitzen diese Glaskeramiken eine ausgezeichnete Temperaturunterschiedsfestigkeit und Temperaturwechselbeständigkeit.

Bei der Anwendung als Kochfläche hat die technische Entwicklung aufgrund der Erfordernisse aus dem praktischen Einsatz zu sehr spezifischen, teilweise gegenläufigen Anforderungen an die Transmission geführt.

Um die störende Durchsicht auf die technischen Bauelemente unter der Glaskeramik-Kochfläche zu verhindern und um die Blendwirkung durch strahlende Heizkörper, insbesondere helle Halogen-Heizkörper zu vermeiden, sind die Glaskeramik-Kochflächen in ihrer Lichttransmission begrenzt. Andererseits sollen während des Betriebes, auch bei niedriger Leistung die strahlenden Heizkörper gut erkennbar sein. Auch für die Anzeigefähigkeit ist eine gewisse Lichttransmission erforderlich, da die üblichen roten Leuchtdioden unterhalb der Kochplatte eingebaut werden. Um diesen Anforderungen zu genügen, sind Glaskeramik-Kochflächen üblicherweise auf Werte der Lichttransmission von 0,5 bis 2,5 % eingestellt. Dies wird durch Zusätze von färbenden Elementen erreicht. Glaskeramik-Kochflächen erscheinen dann unabhängig vom verwendeten Farbelement aufgrund der niedrigen Lichttransmission in Aufsicht schwarz, in Durchsicht je nach verwendeten farbgebenden Elementen meist rot, rotviolett oder braunorange.

Farbige Anzeigen bestehen aus Licht emittierenden elektronischen Bauteilen, meist Leuchtdioden, die unterhalb der Kochfläche eingebaut werden. Sie sind für den Bedienungskomfort und den sicheren Betrieb gewünscht. So werden beispielsweise die aktuelle Heizleistung oder Restwärme der verschiedenen Kochzonen optisch angezeigt. Die Anzeige der Restwärme ist für die sichere Handhabung wichtig, wenn die Heizkörper nicht strahlen oder wenn, wie bei induktiv beheizten Kochflächen generell nicht zu erkennen ist, dass die Kochfläche heiß ist. Die üblichen roten Leuchtdioden strahlen bei Wellenlängen um 630 nm. Um den Bedienungskomfort und die technischen Funktionen zu verbessern, aber auch um den Hausgeräteherstellern über das Design eine Möglichkeit zur Differenzierung zu eröffnen, sind neben den üblichen roten auch andersfarbige Anzeigen gewünscht.

Im Infraroten ist eine Transmission der Kochfläche von 45 - 85 % gewünscht.

Eine hohe Transmission im Infraroten ist vorteilhaft, weil die Strahlung direkt auf den Topfboden trifft, dort absorbiert wird und damit ein schnelleres Ankochen erreicht wird. Bei zu hoher Transmission kann sich die Umgebung der Kochfläche bei Fehlbedienung, z. B. bei frei strahlender Kochzone durch einen verschobenen Topf zu stark erwärmen.

Ein früherer Typ von Glaskeramik-Kochflächen, bekannt unter dem Namen Ceran Color®, hergestellt von der SCHOTT AG, besaß gute farbliche Anzeigefähigkeit. Ceran Color® ist durch Zusätze von NiO, CoO, Fe₂O₃ und MnO gefärbt und durch Sb₂O₃ geläutert. Durch diese Kombination von Farboxiden wird eine Lichttransmission von typischerweise 1,2 % für Kochflächen mit üblicher Dicke von 4 mm eingestellt. Die Transmission im Bereich von 380 nm bis 500 nm beträgt je nach Wellenlänge 0,1 - 2,8 %. Bei einer für rote Leuchtdioden üblichen Wellenlänge von 630 nm beträgt die Transmission ca. 6 %. Nachteilig bei diesem früheren Typ von Glaskeramik-Kochflächen ist, dass die verwendeten Farboxide auch sehr stark im Infraroten absorbieren. Die IR-Transmission bei 1600 nm beträgt weniger als 20 %. Damit ist die Ankochgeschwindigkeit herabgesetzt. Die Transmissionskurve von Ceran Color® ist in dem Buch "Low Thermal Expansion Glass Ceramics", Editor Hans Bach, Springer-Verlag Berlin Heidelberg 1995, auf Seite 66 abgebildet (ISBN 3-540-58598-2). Die Zusammensetzung ist in dem Buch "Glass-Ceamic Technology", Wolfram Höland und George Beall, The American Ceramic Society 2002 in Tabelle 2 - 7 aufgeführt.

In neueren, weiter entwickelten Glaskeramik-Kochflächen wird meist V₂O₅ zur Einfärbung verwendet, weil es die besondere Eigenschaft besitzt, im Bereich des sichtbaren Lichtes zu absorbieren und im Bereich der Infrarotstrahlung eine hohe Transmission zu erlauben.

Die Einfärbung durch V₂O₅ stellt sich als ein recht komplexer Prozess dar. Wie in früheren Untersuchungen (DE 19939787 C2) gezeigt wurde, ist für die Überführung des Vanadiumoxids in den färbenden Zustand ein Redoxvorgang Voraussetzung. Im kristallisierbaren Ausgangsglas färbt das V₂O₅ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner fungiert das Läutermittel. Gezeigt wurde das durch Mössbauer-Untersuchungen an Sb- und Sn-geläuterten Zusammensetzungen. Beim Keramisieren wird ein Teil des Sb³⁺ bzw. Sn²⁺ im Ausgangsglas in die höhere Oxidationsstufe Sb⁵⁺ bzw. Sn⁴⁺ überführt. Es ist anzunehmen, dass das Vanadium in reduzierter Oxidationsstufe als V⁴⁺ oder V³⁺ in den Keimkristall eingebaut wird und dort durch Elektronen-Chargetransfer-Reaktionen intensiv färbt. Als weiterer Redoxpartner kann auch TiO₂ die Einfärbung durch Vanadiumoxid verstärken. Neben der Art und Menge der Redoxpartner im Ausgangsglas hat auch der Redoxzustand der im Glas bei der Schmelze eingestellt wird einen Einfluss. Ein niedriger Sauerstoff-Partialdruck pO₂ (reduzierend eingestellte Schmelze) z.B. durch hohe Schmelztemperaturen verstärkt die Farbwirkung des Vanadiumoxids.
Einen weiteren Einfluss auf die Farbwirkung des Vanadiumoxid haben die Keramisierungsbedingungen. Insbesondere führen hohe Keramisierungstemperaturen und längere Keramisierungszeiten zu einer stärkeren Einfärbung.

Die beschriebenen Zusammenhänge bei der Einfärbung durch V₂O₅ wird der Fachmann nutzen, um durch eine bestimmte Glaszusammensetzung, bestimmte Redox-Einstellungen des pO₂ bei der Schmelze und die Keramisierungsbedingungen den gewünschten Transmissionsverlauf einzustellen. Bisher war es aber nicht möglich, alle Anforderungen wie spezifikationsgerechte Lichttransmission, hohe IR-Transmission, sowie Anzeigefähigkeit für standardmäßige rote Leuchtdioden zusammen mit der gewünschten verbesserten Anzeigefähigkeit für andersfarbige Leuchtanzeigen zu erreichen. Die Form der Absorptionsbande des Vanadinoxids und damit die Transmission im Bereich des sichtbaren Lichtes im gesamten Wellenlängenbereich größer als 450 nm bis zur oberen Grenze von 750 nm konnte nicht zu höheren Transmissionen angepasst werden.

Beispiele für solche V₂O₅-gefärbten Glaskeramik-Kochflächentypen sind das Sb₂O₃-geläuterte Ceran Hightrans® und das SnO2-geläuterte Ceran Suprema®, die von der Firma SCHOTT AG hergestellt werden. Die Transmissionskurven dieser beiden Glaskeramiken sind veröffentlicht in dem Buch "Low Thermal Expansion Glass Ceramics", Second Edition, Editor Hans Bach, Dieter Krause, Springer-Verlag Berlin Heidelberg 2005, auf Seite 63 (ISBN 3-540-24111-6).

Der Transmissionswert von 0,1 % wird bei den genannten Glaskeramik-Kochflächen und bei anderen im Markt befindlichen Glaskeramik-Kochflächen in dem für die Sichtbarkeit farbiger, insbesonderer blauer und grüner Anzeigen wichtigen Wellenlängen von ca. 450 - 550 nm unterschritten. Andere wesentliche Anforderungen an die Transmission werden von diesen Glaskeramik-Kochflächen erfüllt: hohe Infrarot-Transmission für hohe Ankochgeschwindigkeiten, spezifikationsgerechte Transmission für standardmäßige rote Leuchtdioden bei ca. 630 nm und eine Lichttransmission um 1,5 %.

Um diesen Nachteil zu beheben offenbart die europäische Patentanmeldung EP 1465460 A2 eine Glaskeramik-Kochfläche, die im CIE-Farbsystem gemessen, mit Normlicht C einen Y-Wert (brightness) von 2,5 - 15 besitzt, bei einer Dicke von 3 mm. Die Bezeichnungen "brightness" und Lichttransmission entsprechen dergleichen Messgröße. Der Y-Wert ist identisch mit dem Wert der Lichttransmission, gemessen nach DIN 5033. Mit dieser Lichttransmission werden verbesserte Anzeigen für blaue und grüne Leuchtdioden erreicht. Die offenbarten Zusammensetzungen sind mit AS₂O₃ und/oder Sb₂O₃, teilweise in Kombination mit SnO₂ geläutert. Die Einfärbung wird durch V₂O₅ vorgenommen. In dem Vergleichsbeispiel wird aufgezeigt, dass bei einer Lichttransmission von 1,9 % die Anzeigefähigkeit für blaue und grüne Leuchtdioden mit den aufgeführten Materialzusammensetzungen unzureichend ist. Die beanspruchten hohen Werte der Lichttransmission von mindestens 2,5 % und bevorzugt höher sind jedoch nachteilig, hinsichtlich der Abdeckung der elektronischen Bauteile unterhalb der Kochfläche. Außerdem wird das ästhetische schwarze Erscheinungsbild der Kochfläche in Aufsicht beeinträchtigt.

Es ist Aufgabe der Erfindung, transparente, eingefärbte Kochflächen mit verbesserter farbiger Anzeigefähigkeit, sowie ein Verfahren zu ihrer Herstellung bereitzustellen, wobei die Kochflächen aus einer Glaskeramik mit Hochquarz-Mischkristallen als vorherrschender Kristallphase bestehen, bis auf unvermeidliche Spuren keines der chemischen Läutermittel Arsenoxid und/oder Antimonoxid enthalten und sich für eine wirtschaftliche und umweltfreundliche Herstellung eignen. Ferner sollen die Ausgangsgläser für eine wirtschaftliche Herstellung gut schmelzbar und läuterbar sein, über eine hohe Entglasungsstabilität verfügen und in kurzen Zeiten keramisierbar sein. Die erfindungsgemäßen Kochflächen sollen allen weiteren Anforderungen genügen, die an Kochflächen gestellt werden wie z.B.: chemische Beständigkeit, Temperaturbelastbarkeit und hohe Temperatur/Zeitbelastbarkeit hinsichtlich Änderungen ihrer Eigenschaften (wie z.B. thermische Ausdehnung, Transmission, Aufbau von Spannungen).

Diese Aufgaben werden durch eine Kochfläche gemäß Anspruch 1 und durch ein Verfahren gemäß Anspruch 7 gelöst.

Die eingefärbten Kochflächen verfügen über Transmissionswerte von größer als 0,1 % im Bereich des sichtbaren Lichtes im gesamten Wellenlängenbereich von größer als 450 nm, eine Lichttransmission im Sichtbaren von 0,8 - 2,5 % und eine Transmission im Infraroten bei 1600 nm von 45 - 85 %.

Durch die erfindungsgemäße Lichttransmission von 0,8 - 2,5 % ist sichergestellt, dass die störende Durchsicht auf die technischen Bauelemente unter der Glaskeramik-Kochfläche verhindert wird und das ästhetische schwarze Erscheinungsbild in Aufsicht gewährleistet ist. Strahlende Heizkörper sind im Betrieb sichtbar und übliche rote Leuchtdioden-Anzeigen gut erkennbar. Durch die Transmission von größer als 0,1 % im Bereich des sichtbaren Lichtes im gesamten Wellenlängenbereich größer als 450 nm sind auch andersfarbige Anzeigen gut erkennbar. Angesichts der Leuchtkraft handelsüblicher blauer, grüner, gelber oder oranger Leuchtdioden ist dieser Transmissionswert ausreichend und stellt eine deutliche Verbesserung gegenüber dem Stand der Technik dar. Insbesondere die Anzeige mit blauen und grünen Farben ist deutlich verbessert. Anzeigen mit weißem Licht werden durch den Transmissionsverlauf im gesamten Wellenlängenbereich größer als 450 nm farblich weniger verfälscht. Unterhalb von 350 nm, im Bereich des Ultravioletten, werden die niedrigen Transmissionswerte von deutlich weniger als 0,01 % der bekannten Glaskeramik-Kochflächen auch mit der erfindungsgemäßen Kochfläche sichergestellt. Die Blockierung des UV-Lichtes ist vorteilhaft zum Schutz organischer Komponenten, wie z.B. Kleber in den technischen Einbauten unter der Kochfläche, sowie als Schutz beim Kochen, falls blaue Leuchtdioden mit Ultraviolett-Strahlungsanteil zur Anzeige eingesetzt werden.
Durch die eingestellte Infrarot-Transmission von 45 - 85 %, gemessen bei 1600 nm, werden die Forderungen an hohe Ankochgeschwindigkeit und Schutz vor unzulässiger Erwärmung der Umgebung der Kochfläche erreicht. Da die erfindungsgemäßen Werte der Transmission und Lichttransmission für die Funktion der Kochfläche maßgeblich sind, gelten sie unabhängig von der Dicke der Kochfläche, die üblicherweise zwischen 2,5 und 6 mm beträgt. Kleinere Dicken sind nachteilig hinsichtlich der Festigkeit und größere Dicken sind unwirtschaftlich, weil sie mehr Material erfordern und die Keramisierungsgeschwindigkeit herabsetzen. Meist liegt die Dicke der Kochfläche bei etwa 4 mm. Die angegeben Transmissionswerte für kommerzielle Kochflächen und in den Ausführungsbeispielen beziehen sich daher, wenn nicht anders ausgeführt auf diese Dicke. Wenn die Kochfläche über Formgebung mit Walzen hergestellt wird, ist die Unterseite meist mit Noppen versehen, um sie vor festigkeitserniedrigenden Verletzungen bei der Herstellung zu schützen. Oft wird die Kochflächen-Unterseite im Bereich der farbigen Anzeigen mit transparentem organischen Polymer geglättet, um eine optische Verzerrung durch die Noppen zu vermeiden. Bei Kochflächen mit glatter Unterseite ohne Noppen sind farbigen Anzeigen unverzerrt und heller wahrnehmbar.

Um die Forderungen an die Temperaturbelastbarkeit sicherzustellen verfügen die erfindungsgemäßen Kochflächen bevorzugt über niedrige Wärmeausdehnungskoeffizienten von weniger als 1 · 10⁻⁶/K, bevorzugt von (0 ± 0,3) · 10⁻⁶/K.

Die erfindungsgemäßen transparenten, eingefärbten Kochflächen zeichnen sich also durch eine Zusammensetzung ohne Verwendung von Arsen- und Antimonoxid als Läutermittel aus und sind damit technisch frei von diesen unter Sicherheits- und Umweltschutzaspekten nachteiligen Komponenten. Als Verunreinigung liegen diese Komponenten üblicherweise in Gehalten von weniger als 500 ppm vor.

Das erfindungsgemäße Verfahren zur Herstellung einer transparenten, eingefärbten Kochfläche mit verbesserter farbiger Anzeigefähigkeit zeichnet sich dadurch aus, dass es eine Glaskeramik mit Hochquarz-Mischkristall als vorherrschender Kristallphase ausbildet und dass bis auf unvermeidliche Spuren, auf die chemischen Läutermittel Arsen- und Antimonoxid verzichtet wird und die Kochfläche auf Transmissionswerte von größer als 0,1 % im Bereich des sichtbaren Lichtes im gesamten Wellenlängenbereich größer als 450 nm, eine Lichttransmission im Sichtbaren von 0,8 bis 2,5 % und eine Transmission im Infraroten bei 1600 nm von 45 bis 85 % eingestellt wird.

Um die Blasenqualität zu verbessern können neben dem eingesetzten SnO₂ zusätzlich weitere Läuterzusätze wie z.B. CeO₂, Sulfatverbindungen, Halogenidverbindungen eingesetzt werden. Deren Gehalte sind üblicherweise auf Mengen bis 1 Gew.-% begrenzt. Bei der Herstellung von Kochflächen sind als gute Blasenqualitäten solche mit Blasenzahlen von unter 10, bevorzugt unter 5 Blasen/kg Glas (bezogen auf Blasengrößen größer als 0,1 mm) gewünscht.

Bevorzugt ist die Transmission der Kochfläche auf Werte von > 0,15 % bei 450 nm
> 0,15 % bei 500 nm
> 0,25 % bei 550 nm
3 - 9 % bei 630 nm
50 - 80 % bei 1600 nm
und eine Lichttransmission im Sichtbaren von 1,0 - 2,0 % eingestellt.

Bei diesen Werten ist die farbliche Anzeigefähigkeit weiter verbessert und die unterschiedlichen Forderungen an den Transmissionsverlauf werden weiter optimiert. Eine weiter verbesserte Abdeckung der technischen Einbauten unterhalb der Kochflächen-Glaskeramik und ein besonders ästhetisches schwarzes Aussehen in Auflicht wird erreicht, wenn die Lichttransmission weniger als 1,7 % beträgt. Transmissionswerte der Kochfläche bei 630 nm von 3 bis 9 % entsprechen den Toleranzwerten handelsüblicher Kochflächen. Es ist vorteilhaft diese Werte einzustellen, damit das Erscheinungsbild der gebräuchlichen roten LED-Anzeigen auch bei der erfindungsgemäßen Kochfläche unverändert ist.

Weiter verbessert sich die Anzeigefähigkeit, wenn in bevorzugter Ausführung die Transmission der Kochfläche auf Werte von
> 0,10 % bei 400 nm
> 0,15 % bei 450 nm
> 0,25 % bei 500 nm
> 0,30 % bei 550 nm
3 - 9 % bei 630 nm
50 - 80 % bei 1600 nm
und eine Lichttransmission im Sichtbaren von 1,0 - 1,7 % eingestellt wird.

Die erfindungsgemäße Kochfläche besitzt eine Zusammensetzung der Glaskeramik, die in Gew.-% auf Oxidbasis im Wesentlichen besteht aus:

| | |
|---|---|
| Li₂O | 3,0 - 4,2 |
| ∑ Na₂O+K₂O | 0,2 - 1,5 |
| MgO | 0 - 1,5 |
| ∑ CaO+SrO+BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2,5 - 4 |
| ZrO₂ | 0,5 - 2 |
| P₂O₅ | 0 - 3 |
| SnO₂ | 0,1 - < 0,6 |
| ∑ TiO₂+ZrO₂+SnO₂ | 3,8 - 6 |
| V₂O₅ | 0,01 - 0,06 |
| Fe₂O₃ | 0,03 - 0,2, |

mit der Bedingung:
1 < Fe₂O₃ / V₂O₅ < 8.

Der Begriff "im Wesentlichen besteht aus" bedeutet, dass die aufgeführten Komponenten wenigstens 96 % in der Regel 98 % der Gesamtzusammensetzung betragen sollen. Eine Vielzahl von Elementen wie z.B. F, Cl, die Alkalien Rb, Cs oder Elemente wie Hf sind bei den großtechnisch verwendeten Gemengerohstoffen übliche Verunreinigungen. Andere Verbindungen wie z.B. solche der Elemente Ge, seltene Erden, Bi, W, Nb, Ta, Y können in geringen Anteilen zugesetzt werden.

Neben dem Farboxid V₂O₅ in Gehalten von 0,01 bis 0,06 Gew.-% können auch weitere färbende Komponenten wie z.B. Chrom-, Mangan-, Kobalt-, Nickel-, Kupfer-, Selen-, Selten Erd-, Molybdänverbindungen eingesetzt werden, um die Färbung zu unterstützten. Ihr Gehalt ist auf Mengen von maximal etwa 1 Gew.-% begrenzt, weil diese Verbindungen in der Regel die Transmission im Infrarot absenken. Außerdem können diese größtenteils polyvalenten Verbindungen die Einfärbung des V₂O₅ über Redox-Reaktionen stören und die Einstellung der erfindungsgemäßen Transmission erschweren.

Durch Zusatz von 50 - 400 ppm Nd₂O₃ ist es möglich, die Glaskeramik-Kochfläche zu markieren. Die Absorptionsbande des Nd im nahen Infrarot bei 806 nm liegt in einem Bereich hoher Transmissionswerte der Glaskeramik und ist so markant im Transmissionsspektrum. Dadurch kann das Kochflächenmaterial sicher dem Hersteller zugeordnet werden und mit optischen Scherbenerkennungsverfahren ist ein gutes Recycling möglich.

Der Wassergehalt der Ausgangsgläser zur Herstellung der erfindungsgemäßen Kochflächen liegt abhängig von der Wahl der Gemengerohstoffe und der Prozessbedingungen bei der Schmelze üblicherweise zwischen 0,015 und 0,06 mol/l. Dies entspricht β-OH-Werten von 0,16 bis 0,64 mm⁻¹ für die Ausgangsgläser.

Die Oxide Li₂O, Al₂O₃ und SiO₂ in den angegebenen Grenzen sind notwendige Bestandteile der Hochquarz-Mischkristalle. Ein Mindestgehalt an Li₂O von 3 Gew.-% ist erforderlich, doch führen Li₂O-Gehalte von über 4,2 Gew.-% in einem Herstellprozess häufig zu einer ungewollten Entglasung. Ein Gehalt von 3,2 bis 4,0 Gew.-% führt zu besonders guten Ergebnissen.

Zu Vermeidung hoher Viskositäten des Ausgangsglases und zur Unterdrückung der Neigung einer unerwünschten Entglasung von Mullit bei der Formgebung ist der Al₂O₃-Gehalt auf maximal 23 Gew.-%, insbesondere 22 Gew.-% begrenzt. Der SiO₂-Gehalt soll maximal 69 Gew.-% betragen, weil diese Komponente die Viskosität des Glases stark erhöht. Bevorzugt wird diese Komponente weiter auf Werte von maximal 68 und weiter maximal 67 Gew.-% begrenzt. Für gutes Einschmelzen der Gläser und für niedrige Formgebungstemperaturen sind höhere Gehalte von SiO₂ unwirtschaftlich. Der Mindestgehalt an SiO₂ soll 60 Gew.-%, insbesondere 62 Gew.-% betragen, weil dies für die geforderten Kochflächeneigenschaften, wie z.B. chemische Beständigkeit und Temperaturbelastbarkeit vorteilhaft ist.

Als weitere Komponenten können MgO, ZnO und P₂O₅ in die Hochquarz-Mischkristalle eingebaut werden. Der ZnO-Gehalt ist wegen der Problematik der Bildung unerwünschter Kristallphasen wie Zink-Spinell (Gahnit) bei der Keramisierung auf Werte von höchstens 2,0 Gew.-%, bevorzugt höchstens 1,8 Gew.-% begrenzt. Der MgO-Gehalt ist auf maximal 1,5 Gew.-%, bevorzugt bis zu 1,2 Gew.-% begrenzt, weil er sonst den Ausdehnungskoeffizienten der Glaskeramik unzulässig erhöht. Ein MgO-Mindestgehalt von 0,1 Gew.-% wird in der Regel benötigt, damit die thermische Ausdehnung der Glaskeramik nicht auf negative Werte fällt.

Die Zugabe der Alkalien Na₂O, K₂O und der Erdalkalien CaO, SrO, BaO sowie von B₂O₃ verbessern die Schmelzbarkeit und die Entglasungsstabilität bei der Formgebung des Glases. Die Gehalte müssen jedoch begrenzt werden, weil diese Komponenten nicht in die Kristallphasen eingebaut werden, sondern im wesentlichen in der Restglasphase der Glaskeramik verbleiben. Zu hohe Gehalte erhöhen die thermische Ausdehnung der Glaskeramik in unzulässiger Weise und beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Außerdem wirken sich höhere Gehalte ungünstig auf die Zeit-/Temperaturbelastbarkeit der Glaskeramik aus. Die Summe der Alkalien Na₂O + K₂O soll mindestens 0,2, bevorzugt mindestens 0,4 Gew.-% betragen und maximal 1,5 Gew.-%, bevorzugt maximal 1,2 Gew.-%.

Die Summe der Erdalkalien CaO + SrO + BaO soll maximal 4 Gew.-%, bevorzugt mindestens 0,2 Gew.-% betragen. Die genannten Alkalien und Erdalkalien reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die an diesen Elementen angereichert und an Lithium abgereichert ist. Diese glasige Oberflächenschicht wirkt sich günstig auf die chemische Beständigkeit der Glaskeramik aus.

Die Zugabe an P₂O₅ kann bis zu 3 Gew.-% betragen und ist bevorzugt auf 1,5 % begrenzt. Die Zugabe von P₂O₅ ist günstig für die Entglasungsfestigkeit. Höhere Gehalte wirken sich ungünstig auf die Säurebeständigkeit aus.

TiO₂, ZrO₂ und SnO₂ sind als Keimbildner erforderlich. Bei der Keramisierung bilden sie während der Keimbildung Keime in hoher Dichte, die für das Aufwachsen der Hochquarz-Mischkristalle bei der Kristallisation als Unterlage dienen. Höhere Gehalte als in der Summe 6 Gew.-% verschlechtern die Entglasungsstabilität. Dies gilt besonders für die Komponente SnO₂, die auf Werte von weniger als 0,6 Gew.-% begrenzt ist. Höhere Gehalte führen zur Kristallisation von Sn-haltigen Kristallphasen an den Kontaktmaterialien (z.B. Pt/Rh) bei der Formgebung und sind unbedingt zu vermeiden. Der ZrO₂-Gehalt ist auf 2 Gew.-%, bevorzugt 1,8 Gew.-% und weiter bevorzugt auf maximal 1,6 Gew.-% begrenzt, da höhere Gehalte das Einschmelzverhalten des Gemenges bei der Glasherstellung verschlechtern und die Entglasungsstabilität bei der Formgebung durch Bildung von ZrO₂- haltigen Kristallen beeinträchtigt werden kann. Der Mindestgehalt an ZrO₂ soll 0,5 Gew.-% und bevorzugt 0,8 Gew.-% betragen, um eine hohe Keramisierungsgeschwindigkeit zu begünstigen. Der TiO₂-Gehalt liegt zwischen 2,5 und 4,0 Gew.-%, bevorzugt mindestens 2,8 Gew.-%. Die Mindestmenge soll nicht unterschritten werden, damit eine schnelle Keimbildung für das Erzielen hoher Keramisierungsgeschwindigkeiten sichergestellt ist. Der Gehalt soll 4 Gew.-% nicht übersteigen, weil sonst die Entglasungsstabilität verschlechtert wird.

Überraschend wurde nun gefunden, dass Fe₂O₃-Gehalte ab 600 ppm, bevorzugt ab 700 ppm in Kombination mit eng spezifizierten Gehalten von TiO₂, V₂O₅ und SnO₂ den Transmissionsverlauf beeinflussen können. Da sich Fe₂O₃, speziell der Anteil an zweiwertigen Fe²⁺ negativ auf die IR-Transmission auswirkt, soll der Fe₂O₃-Gehalt maximal 0,2 und bevorzugt maximal 0,18 Gew.-% betragen. Besonders bevorzugt ist ein Fe₂O₃-Gehalt von 0,08 - 0,15 Gew.-%.

Die Kombination der Farboxide Fe₂O₃ mit V₂O₅ und seinem Redox-Partner SnO₂ gestattet es, mit geringeren Mengen des kostspieligen und als Gefahrstoff eingestuften Färbemittels V₂O₅ auszukommen. Dabei werden die Anforderungen an die Transmission bei niedrigen Wellenlängen ab 450 nm und die anderen Forderungen wie spezifikationsgerechte Lichttransmission, Infrarot-Transmission, sowie die Transmission bei 630 nm eingehalten. Die Transmissionskurve wird gegenüber den bekannten mit Vanadiumoxid gefärbten Glaskeramiken im Bereich des sichtbaren Lichtes flacher. Um den Gehalt des teueren und als Gefahrstoff nicht unbedenklichen Färbemittels V₂O₅ zu reduzieren ist es unverzichtbar, dass der Fe₂O₃-Gehalt mindestens so hoch sein muss wie der V₂O₅-Gehalt und damit der Bedingung genügen muss
1 < Fe₂O₃ / V₂O₅ < 8.

Das Farboxid Fe₂O₃ ist also mengenmäßig das Hauptfärbemittel und bevorzugt ist der Gehalt doppelt so hoch wie der des V₂O₅. Dadurch ist es auch möglich, kostengünstigere Gemengerohstoffe einzusetzen.
Weitere Komponenten, die dazu beitragen den benötigten V₂O₅ -Gehalt zu verringern sind SnO₂ und TiO₂. Für die erfindungsgemäße Einstellung der Transmission ist es daher erforderlich V₂O₅, SnO₂, TiO₂ und Fe₂O₃ in bestimmten engen Grenzen einzustellen. Insbesondere der TiO₂-Gehalt muss eine bestimmte Mindestmenge überschreiten.

Mit den erfindungsgemäßen Fe₂O₃-, TiO₂-, V₂O₅- und SnO₂-Gehalten ist es möglich, alle Anforderungen an den Transmissionsverlauf, wie spezifikationsgerechte Lichttransmission, hohe Infrarot-Transmission, sowie Anzeigefähigkeit für standardmäßige rote Leuchtdioden zusammen mit der gewünschten verbesserten Anzeigefähigkeit für andersfarbige Leuchtanzeigen zu erreichen.

Als weiteres wichtiges Ergebnis der Zugabe von Fe₂O₃ wurde gefunden, dass dies die Läuterung wesentlich unterstützt. In Kombination mit dem SnO₂ als Hauptläutermittel gibt auch das Fe₂O₃ Sauerstoff ab und wird dabei zum Fe²⁺ reduziert. Der für die Läuterwirkung maßgebliche Umsatz steigt mit der Temperatur der Schmelze an. Eine Temperaturbehandlung der Schmelze von größer als 1700°C und weiter größer als 1750 °C liefert also hinsichtlich der Blasenqualität weiter verbesserte Ergebnisse. Damit sich die Zugabe von Fe₂O₃ als zusätzliches Läutermittel in Kombination mit SnO₂ besonders vorteilhaft auswirkt, sollte der Gehalt mindestens 20 % des SnO₂-Gehaltes betragen.

Für eine wirtschaftliche Herstellung ist eine schnelle Keramisierbarkeit des Ausgangsglases gewünscht. Dabei ist es notwendig, die Keimbildungs- und Keramisierungsgeschwindigkeit durch eine entsprechend gewählte Zusammensetzung zu erhöhen. Hierbei hat es sich als vorteilhaft erwiesen, die Gehalte der Keimbildner TiO₂ + ZrO₂ + SnO₂ zu erhöhen, um die Keimbildungsgeschwindigkeit anzuheben, während der Gehalt an P₂O₅ zu niedrigeren Werten gewählt werden muss. Weiterhin sind beim Keramisieren auftretende Verzerrungen der Kochflächen ein begrenzender Faktor. Großtechnische Keramisierungsöfen haben eine gewisse Temperaturinhomogenität und daher ist es schwierig, die Temperatur an Ober- und Unterseite des kristallisierbaren Glases während der Kristallisation völlig gleichmäßig einzustellen. Geringe Temperaturunterschiede von wenigen °C führen zu früherer Kristallisation auf der Plattenseite mit der höheren Temperatur. Verbunden mit dem linearen Kristallisationsschrumpf von ca. 1 % kommt es dann zu den Verzerrungen. Handelsübliche Kochflächen sind üblicherweise auf eine Verzerrung von weniger als 0,1 % ihrer diagonalen Abmessung spezifiziert.
Um diese Verzerrung bei einem schnellen Keramisierungsprogramm zu minimieren, hat es sich als günstig erwiesen, den Anteil der Kristallphase bildenden Komponenten wie Li₂O, SiO₂ zu minimieren und den Anteil der Komponenten, die die Restglasphase der Glaskeramik bilden, wie die Alkalien Na₂O und K₂O sowie die Erdalkalien CaO, SrO, BaO zu erhöhen. Der Anteil der Hochquarz-Mischkristallphase beträgt vorteilhafterweise weniger als 70 Gew.-% und liegt bei 60 bis 70 Gew.-%. Bei der Keramisierung befindet sich die Glaskeramikplatte auf einer ebenen Unterlagsplatte. Durch den erhöhten Anteil der Restglasphase und die Verringerung des Kristallphasenanteils werden entstandene Verzerrungen durch viskoses Fließen bei den hohen Temperaturen verringert, indem sich die Glaskeramikplatte auf der ebenen Unterlage anlegt.

Bevorzugt besitzt die erfindungsgemäße Kochfläche bezüglich schneller Keramisierbarkeit des Ausgangsglases eine Zusammensetzung der Glaskeramik, die in Gew.-% auf Oxidbasis im wesentlich besteht aus:

| | |
|---|---|
| Li₂O | 3,2 - 4,2 |
| Na₂O | 0,1 - 1 |
| K₂O | 0,1 - 1 |
| ∑ Na₂O+K₂O | 0,2 - 1,5 |
| MgO | 0 - 1,5 |
| ∑ CaO+SrO+BaO | 0,1 - 4 |
| ZnO | 0 - 2 |
| B₂O₃ | 0 - 1 |
| Al₂O₃ | 19 - 23 |
| SiO₂ | 60 - 68 |
| TiO₂ | 2,8 - 4 |
| ZrO₂ | 0,8 - 1,8 |
| P₂O₅ | 0 - 1,5 |
| SnO₂ | 0,1 - < 0,6 |
| ∑ TiO₂+ZrO₂+SnO₂ | 4,4 - 6 |
| V₂O₅ | 0,01 - 0,05 |
| Fe₂O₃ | 0,07 - 0,18, |

mit der Bedingung:
2 < Fe₂O₃ / V₂O₅ < 6.

Unter einer schnellen Keramisierbarkeit wird eine thermische Behandlung zur Kristallisation der Glaskeramik mit einer Dauer von weniger als 2 Stunden, bevorzugt weniger als 80 Minuten verstanden.

Bei dem erfindungsgemäßen Verfahren zur Keramisierung wird das thermisch entspannte kristallisierbare Ausgangsglas innerhalb von 3 - 30 min auf den Temperaturbereich von etwa 680°C erhitzt. Die erforderlichen hohen Heizraten können großtechnisch in Rollenöfen realisiert werden. Dieser Temperaturbereich von etwa 680°C entspricht in etwa der Transformationstemperatur des Glases. Oberhalb dieser Temperatur bis etwa 800°C ist der Bereich mit hohen Keimbildungsraten. Der Temperaturbereich der Keimbildung wird über einen Zeitraum von 10 bis 30 Minuten durchfahren. Danach wird die Temperatur des Kristallisationskeime enthaltenden Glases innerhalb von 5 bis 30 Minuten auf eine Temperatur von 850 bis 950°C, die sich durch hohe Kristallwachstumsgeschwindigkeiten der Hochquarz-Mischkristallphase auszeichnet, erhöht. Diese maximale Temperatur wird bis zu 20 Minuten gehalten. Dabei wird das Gefüge der Glaskeramik homogenisiert und die optischen, physikalischen und chemischen Eigenschaften eingestellt. Die erhaltene Glaskeramik wird bis 800°C mit Abkühlraten von ca 10°C/min und danach rasch auf Raumtemperatur abgekühlt.

Gemengerohstoffe, wie z.B. Bariumnitrat oder Bariumchlorid, die als Quelle für das BaO eingesetzt werden, sind unter Umweltaspekten nachteilig und erfordern besondere Vorsichtsmaßnahmen beim Einsatz. Außerdem erhöht BaO die Dichte der Glaskeramik und damit das Gewicht der Kochfläche. Um den BaO-Gehalt zu verringern oder bis auf Verunreinigungen ganz zu entfernen, hat es sich als günstig erwiesen, BaO durch die chemisch verwandten Erdalkalien CaO und SrO zu substituieren. Dabei sollen die Gehalte an CaO 0,2 bis 1 Gew.-% und an SrO 0,1 bis 1 Gew.-% betragen.

Für eine wirtschaftliche Herstellung soll das kristallisierbare Ausgangsglas gut schmelzbar sein und über eine hohe Entglasungsfestigkeit verfügen. Die Verarbeitungstemperatur soll dabei kleiner als 1320°C und bevorzugt kleiner als 1310 °C sein. Die obere Entglasungsgrenze soll mindestens 30°C, bevorzugt mindestens 50°C unter der Verarbeitungstemperatur liegen. Hinsichtlich der Entglasung kritische Kristallphasen sind Mullit (Aluminiumsilikat), Baddeleyt (ZrO₂) sowie Li₂O-Al₂O₃-SiO₂-Mischkristalle und SnO₂-enthaltende Kristallphasen. Hinsichtlich der Entglasungsfestigkeit sind demnach höhere Gehalte an Li₂O, Al₂O₃, SiO₂, ZrO₂ und SnO₂ nachteilig. Um die Viskosität der Glasschmelze abzusenken hat es sich als notwendig erwiesen, den Gehalt an SiO₂, Al₂O₃, ZrO₂ zu verringern, während die Gehalte an Alkalien Na₂O + K₂O, Erdalkalien CaO + SrO + BaO bei höheren Werten gewählt werden.

Bevorzugt besitzt diesbezügliche eine erfindungsgemäße Kochfläche folgende Zusammensetzung in Gew.-% auf Oxidbasis:

| | |
|---|---|
| Li₂O | 3,2 - 4,0 |
| Na₂O | 0, 2 - 1 |
| K₂O | 0,1 - 1 |
| ∑ Na₂O+K₂O | 0,4 - 1,2 |
| MgO | 0,1 - 1,2 |
| CaO | 0,2 - 1 |
| SrO | 0 - 1 |
| BaO | 0 - 3 |
| ∑ CaO+SrO+BaO | 0,2 - 4 |
| ZnO | 0 - 1,8 |
| B₂O₃ | 0 - 1 |
| Al₂O₃ | 19 - 22 |
| SiO₂ | 62 - 67 |
| TiO₂ | 2,8 - 4 |
| ZrO₂ | 0,5 - 1,6 |
| P₂O₅ | 0 - 1,5 |
| SnO₂ | 0,1 - 0,5 |
| ∑ TiO₂+ZrO₂+SnO₂ | 4,2 - 6 |
| V₂O₅ | 0,01 - 0,05 |
| Fe₂O₃ | 0,08 - 0,15, |

mit der Bedingung:
2 < Fe₂O₃ / V₂O₅ < 6.

Es hat sich gezeigt, dass gezielt reduziert eingestellte Bedingungen des kristallisierbaren Ausgangsglases, die bei der Schmelze vorgenommen werden, eine günstige Wirkung auf den gewünschten Transmissionsverlauf der Glaskeramik haben. Die genannten unterschiedlichen Anforderungen an die Transmission können dann noch besser miteinander vereinbart werden. Der Gleichgewichts-Sauerstoffpartialdruck pO₂ von 1 bar soll dabei bei einer Temperatur von >1580°C, bevorzugt von >1640°C erreicht werden. Je höher diese Temperatur ist, desto reduzierender ist das erhaltene Glas eingestellt und die Anteile der niedrigen Wertigkeiten bei den polyvalenten Komponenten wie z. B. Sn²⁺, Fe²⁺, Ti³⁺ sind erhöht. Dies verstärkt die Farbwirkung des Vanadiumoxids.

Bei den erfindungsgemäßen Temperaturen für den Gleichgewichts-Sauerstoffpartialdruck pO₂ ist es möglich, mit geringen V₂O₅-Gehalten den erfindungsgemäßen Transmissionsverlauf einzustellen. Es werden weniger als 0,04 und bevorzugt weniger als 0,03 Gew.-% benötigt. Da Vanadin auch ein kostspieliger Rohstoff ist, ist es wirtschaftlich vorteilhaft, den Gehalt an V₂O₅ zu minimieren.

Dieser Gleichgewichts-Sauerstoffpartialdruck pO₂ kann bei der Schmelze durch Zusatz von Reduktionsmitteln in pulvriger und/oder flüssiger Form zum Ausgangsgemenge eingestellt werden. Dafür eignen sich Metalle, Kohlenstoff und/oder aufoxidierbare Kohlenstoff- bzw. Metallverbindungen wie z.B. Al- oder Si-Pulver, Zucker, Holzkohle, SiC, TiC, MgS, ZnS. Auch gasförmige Reduktionsmittel, wie z.B. Formiergas sind geeignet. Die genannten Reduktionsmittel sind geeignet den pO₂ der Schmelze zu senken und den gewünschten Wert für den Gleichgewichts-Sauerstoffpartialdruck einzustellen.

Eine bevorzugte Möglichkeit den Gleichgewichts-Sauerstoffpartialdruck pO₂ einzustellen ist die Temperaturbehandlung der Glasschmelze bei Temperaturen von größer als 1700°C, bevorzugt größer als 1750°C. Diese Temperaturbehandlung kann vorteilhafterweise als Hochtemperaturläuterung ausgeführt werden, die es gestattet, großtechnisch die gewünschten niedrigen Blasenzahlen von < 10, bevorzugt < 5 Blasen/kg zu erreichen. Die Läuterwirkung ist deshalb so ausgeprägt, weil das SnO₂ ein Läutermittel ist, das den zum Läutern erforderlichen Sauerstoff bei hohen Temperaturen oberhalb 1700°C verstärkt abgibt. Dies gilt auch für das zusätzliche Läutermittel Fe₂O₃. Die Kombination der beiden liefert also weiter verbesserte Blasenqualitäten, bzw. erlaubt höhere Glasdurchsätze in großtechnischen Schmelzwannen. Der Beitrag des Fe₂O₃ zur Läuterung wird signifikant bei Gehalten von mindestens 20 Gew.-% des eingesetzten Läutermittels SnO₂. Man kann somit den Vorteil einer guten Läuterwirkung mit dem erfindungsgemäßen Vorteil der Einstellung des Gleichgewichts-Sauerstoffpartialdrucks pO₂ auf den bevorzugten Wert verbinden. Der Mechanismus ist dabei der, dass bei den hohen Temperaturen O₂- Läuterblasen gebildet werden, die in der Glasschmelze aufsteigen und diese verlassen, wobei andere gelöste Fremdgase ebenfalls entfernt werden. Bei ausreichenden Zeiten, wenn sämtlicher bei der Läuterung freigesetzter Sauerstoff aus der Schmelze entfernt wird, entspricht die Temperatur bei der der Gleichgewichts-Sauerstoffpartialdrucks pO₂ den Wert 1 bar hat der maximalen Temperatur bei der Behandlung. Da dieses Gleichgewicht bei der großtechnischen Glasschmelze und den verwendeten Durchsätzen aus Zeitgründen nicht ganz erreicht wird, verbleibt immer eine gewisse Menge von Sauerstoff-Läuterblasen in der Schmelze und wird beim Abkühlen resorbiert. Des Weiteren wird in geringem Maße Sauerstoff aus der Umgebung beim Abkühlen der Schmelze von der Maximaltemperatur auf die Formgebungstemperatur VA wiederaufgenommen. Dadurch bedingt, entspricht die gemessene Temperatur des Gleichgewichts-Sauerstoffpartialdrucks pO₂ von 1 bar nicht der Maximaltemperatur bei der Schmelze, sondern liegt darunter. Es sei denn man setzt reduzierende Zusätze zu.

Vorzugsweise sind unter der erfindungsgemäßen Kochfläche mit verbesserter farbiger Anzeigefähigkeit anstelle oder in Ergänzung zu den üblichen roten Anzeigen eine oder mehrere andersfarbige Anzeigen, wie blaue, grüne, gelbe, orange oder weiße angeordnet. Die farbigen Anzeigen bestehen aus Licht emittierenden elektronische Bauteilen, meist aus Leuchtdioden. Die Unterseite der Kochfläche kann die üblichen Noppen besitzen oder glatt ausgeführt sein.

Die Beheizung der Kochfläche kann durch StrahlungsHeizkörper, Halogen-Heizkörper, Induktionsbeheizung oder mit Gas erfolgen. Es sind alle Formen von Anzeigen, punktuelle wie flächige möglich.

Die Kochfläche kann dabei nicht nur als ebene Platte ausgeformt sein, sondern auch dreidimensional verformte wie z.B. abgekantete, gewinkelte oder gewölbte Platten können verwendet werden. Die Platten können rechtwinklig oder in anderen Formen vorliegen, sowie neben ebenen Bereichen dreidimensional verformte Bereiche wie z.B. Woks enthalten.

Die vorliegende Erfindung wird mit Hilfe der folgenden Beispiele weiter verdeutlicht.

Für einige Ausführungsbeispiele sind in Tabelle 1 Zusammensetzungen und Eigenschaften der kristallisierbaren Ausgangsgläser aufgeführt. Dabei handelt es sich bei den Gläsern 1 bis 12 um erfindungsgemäße Gläser und bei dem Glas 13 um ein Vergleichsglas außerhalb der vorliegenden Erfindung, dessen Zusammensetzung der kommerziellen Kochflächen-Glaskeramik Ceran Suprema® der SCHOTT AG entspricht. Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt sind F, Cl, B, P, Rb, Cs, Hf, die üblicherweise weniger als 0,05 Gew.-% betragen. Sie werden oft über die Rohstoffe für die chemisch verwandten Komponenten eingeschleppt, so z.B. Rb und Cs über die Na-, bzw. K- Rohstoffe, oder Sr über den Ba-Rohstoff und umgekehrt.

Der Wassergehalt der Gläser beträgt 0,03 - 0,05 mol/l, entsprechend βOH-Werten von 0,32 bis 0,53 mm⁻¹.

In Tabelle 1 sind auch die Eigenschaften im glasigen Zustand, wie z. B. Transformationstemperatur Tg, Verarbeitungstemperatur V_{A}, Entglasungstemperatur, sowie die Dichte aufgeführt. Bei Gläsern gleicher Zusammensetzung, bei denen die Läutertemperatur variiert wurde, sind diese Eigenschaften gleich.

Zur Messung der Entglasungstemperatur werden die Gläser in Pt/Rh10-Tiegeln aufgeschmolzen. Anschließend werden die Tiegel für 5 Stunden bei verschiedenen Temperaturen im Bereich der Verarbeitungstemperatur V_{A} gehalten. Die oberste Temperatur bei der die ersten Kristalle an der Kontaktfläche der Glasschmelze zur Tiegelwand auftreten bestimmt die Entglasungstemperatur.

Weiter sind in Tabelle 1 die Maximaltemperatur der Schmelze und die zugehörige Zeit, sowie die gemessene Temperatur aufgeführt bei der der pO₂ den Wert 1 bar erreicht. Die pO₂-Messung wurde in bekannter Weise an den wieder aufgeschmolzenen Gläsern als Funktion der Temperatur durchgeführt und die Temperatur für den Gleichgewichts-Sauerstoffpartialdruck pO₂ = 1 bar bestimmt. Bei pO₂-Messungen ist der pO₂ eine Funktion der Temperatur und hängt reversibel von dieser ab, solange kein Sauerstoff mit der Umgebung ausgetauscht wird.

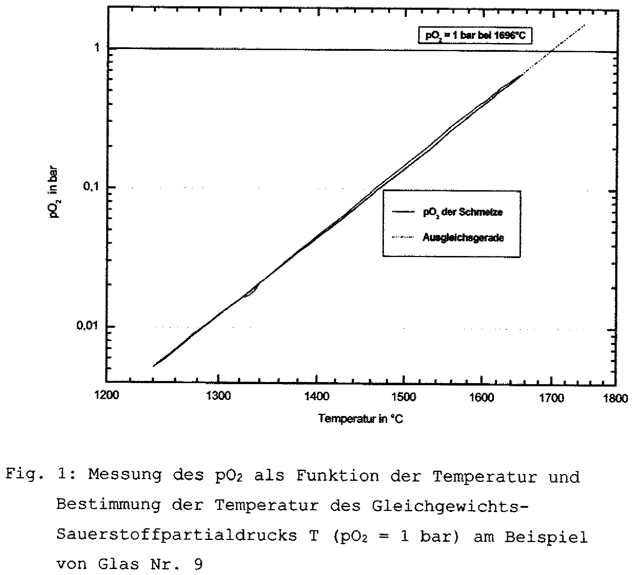

Fig. 1 zeigt die Messung des pO₂(T) für das Glas Nr. 9 und die Bestimmung der charakteristischen Temperatur T (pO₂ = 1 bar). Da die Glasschmelze bei hohen Temperaturen nahe bei der Temperatur des Gleichgewichts-Sauerstoffpartialdrucks T (pO₂ =1 bar) bereits Sauerstoff an die Umgebung abgibt, führt dies dazu, dass der Wert dieser charakteristischen Temperatur verändert wird. Bei der Messung wurde deshalb die Temperatur des Glases bis auf ca. 40°C unter der charakteristischen Temperatur T (pO₂ = 1 bar) erhöht und der Wert durch Extrapolation der gemessenen Gerade log pO₂ proportional zu 1/T bestimmt (siehe Fig.1).

Die Ausgangsgläser von Tabelle 1 wurden aus in der Glasindustrie üblichen Rohstoffen bei Temperaturen von ca. 1620°C, 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach dieser Homogenisierung wurden verschiedene Temperaturbehandlungen zur Läuterung vorgenommen. Die maximalen Schmelz- bzw. Läutertemperaturen und -zeiten finden sich in Tabelle 1.

Die Gläser Nr 2, 3, 5, 6, 8, 10, 11, 13 wurden für 2 Stunden bei 1640°C geläutert. Anschließend wurden Stücke von ca. 140x100x30 mm³ Größe gegossen

Die Gläser 1, 4, 7, 9, 12 und das Vergleichsglas wurden einer Hochtemperaturläuterung mit den in Tabelle 1 angegebenen Temperaturen und Zeiten unterzogen um gute Blasenqualitäten zu erreichen und um reduzierendere Bedingungen entsprechend der angegebenen Temperatur T (pO₂ = 1 bar) einzustellen. Vor Ausgießen der geläuterten Glasschmelze wurde die Temperatur auf etwa 1700°C abgesenkt. Die Gussstücke wurden zur Vermeidung von Spannungen in einem Kühlofen, beginnend bei einer Temperatur von etwa 20°C unter der Transformationstemperatur der Gläser, auf Raumtemperatur abgekühlt. Aus den Gussstücken wurden die Prüfmuster für die Messungen präpariert.
Der positive Einfluss der Hochtemperaturläuterung hinsichtlich der Blasenqualität zeigt sich auch bei den Laborschmelzen. Die absoluten Werte der Blasenzahlen in den Laborschmelzen liegen technisch bedingt (anderes Oberflächen- zu Volumenverhältnis bei Laborschmelzen) um Größenordnungen über denen einer großtechnischen Schmelze. Aussagefähig sind die relativen Unterschiede. Die konventionell um 1640°C geläuterten Schmelzen haben ca. 1000 bis 5000 Blasen/kg Glas, bei Hochtemperaturläuterung ca. 200 bis 2000 Blasen/kg. Bei gleicher Zusammensetzung liefert die Hochtemperaturläuterung die besseren Werte. Großtechnisch werden bei diesen Werten die gewünschten Qualitäten von weniger als 10 Blasen/kg Glas erreicht.
Bei den Gläsern 1, 2, 3 sowie 7, 8 und 9, 10 handelt es sich um gleiche Zusammensetzungen, die unterschiedlich geschmolzen wurden. Glas 1 wurde einer Hochtemperaturläuterung unterzogen. Glas 3 wurde durch Zusatz von 1 Gew.-% Zucker zum Gemenge gegenüber dem bei gleichen Temperaturen geläuterten Glas Nr. 2 reduzierender eingestellt. Demzufolge unterscheiden sich auch die Temperaturen für den Gleichgewichts-Sauerstoffpartialdruck. Aufgrund der damit verknüpften unterschiedlichen, reduzierenden Bedingungen der kristallisierbaren Ausgangsgläser unterscheiden sich bei gleichen Keramisierungsbedingungen die Transmissionswerte der erhaltenen Glaskeramiken. Bei niedrigen Maximaltemperaturen der Schmelze benötigt man höhere Anteile an V₂O₅ oder höhere Keramisierungstemperaturen um die Transmissionswerte anzugleichen.

Die Gläser 1, 4 und das Vergleichsglas 12, sowie Scherben der kommerziell produzierte Glaskeramik Ceran Color® wurden nach der Läuterung und Abstehen bei 1600°C, 50 h in einem 14 l fassenden Pt/Rh10- Tiegel mit einer Laborwalzanlage zu kochflächentypischen Platten ausgeformt. Die Laborwalze besteht aus verkürzten Original-Fertigungswalzen. Die Unterwalze ist für die Herstellung einer gebräuchlichen genoppten Kochflächenunterseite strukturiert. Aus dem erhaltenen Glasband von ca. 200 mm Breite, 4 mm Dicke und 2 m Länge werden nach einer Kühlung zum Abbau von Spannungen die Prüfmuster für die Messungen und Platten der Abmessung 18 cm x 18 cm x 4 mm für die Untersuchungen zur Ebenheit bei schneller Keramisierung präpariert. Die Platten wurden in einem Laborofen mit homogener, steuerbarer Ober- und Unterhitze auf einer ebenen keramischen Unterlagsplatte keramisiert. Es wurde mit 10°C/min auf 750°C, Haltezeit 15 min aufgeheizt. Dann wurde mit 4°C/min auf 900°C, Haltezeit 15 min weiter erhitzt und schnell auf Raumtemperatur abgekühlt. Während des gesamten Programms war die obere Temperatur im Ofen gegenüber der Unterseite um 6°C erhöht. Dadurch wurden die Glaskeramikplatten gezielt domartig verformt. Die Abweichung von der Ebenheit für das Vergleichsglas Nr. 13 betrug 2,1 ± 0,2 mm (6 Versuche), bei Ceran Color® 0,6 ± 0,1 mm (4 Versuche) und bei Glas Nr. 1 und Nr. 4 für beide 0,5 ± 0,1 mm (3 Versuche). Da für das großtechnisch produzierte Glaskeramikmaterial Ceran Color® gezeigt ist, dass es sich in weniger als 80 min mit der geforderten Ebenheit keramisieren lässt, ist dies durch den relativen experimentellen Vergleich auch für die erfindungsgemäßen Gläser gezeigt.

Die Tabelle 2 zeigt die Keramisierungsbedingungen und Eigenschaften der erhaltenen Glaskeramiken und der Vergleichskeramiken 2, 4,17, außerhalb der Erfindung. Die Keramisierungen der Ausgangsgläser erfolgte mit den folgenden Temperatur/Zeit-Programmen, die Werte für Tₘₐₓ und tₘₐₓ sind in der Tabelle 2 angegeben:
Keramisierungsprogramm 1:
   a) Aufheizen innerhalb von 15 Minuten von Raumtemperatur auf 680°C;
   b) Temperaturerhöhung von 680 auf 800°C innerhalb von 34,5 min, dabei Aufheizen mit 10°C/min auf 750°C, Haltezeit von 15 min bei 750°C, Aufheizen mit 4°C/min auf 800 °C;
   c) Temperaturerhöhung von 800°C auf Tₘₐₓ und Haltezeit tₘₐₓ mit Heizrate 4°C/min;
   d) Abkühlen auf 800°C mit 10°C/min, dann schnelle Abkühlung auf Raumtemperatur.
Keramisierungsprogramm 2:
   a) Aufheizen innerhalb von 5 Minuten von Raumtemperatur auf 680°C;
   b) Temperaturerhöhung von 680 auf 800°C innerhalb von 19 min, dabei Aufheizen mit 10°C/min auf 730°C, weiteres Aufheizen mit 5°C/min auf 800 °C;
   c) Temperaturerhöhung von 800°C auf Tₘₐₓ und Haltezeit tₘₐₓ mit Heizrate 5°C/min;
   d) Abkühlen auf 800°C mit 10°C/min, dann schnelle Abkühlung auf Raumtemperatur.

Bei den Vergleichsglaskeramiken, Beispiel 2 und 4 führen die eingestellten pO₂- Werte im Ausgangsglas zu nicht erfindungsgemäßer Lichttransmission. Dies zeigt im Vergleich zu Beispiel 1 den Einfluss des eingestellten Redoxzustandes, da die Beispiele mit gleichen Keramisierungsbedingungen hergestellt wurden.
Dies kann durch Anpassung der Keramisierungsbedingungen korrigiert werden (Beispiel 3 und 5). Die Ausgangsgläser Nr. 1, 2 und 3 der Beispiele 1 bis 5 besitzen gleiche Zusammensetzung und unterscheiden sich nur in dem bei der Schmelze eingestellten Redoxzustand.

Die Werte für die mittlere Kristallitgröße und den Anteil der Hochquarz-Mischkristallphase wurden mittels Röntgenbeugung bestimmt. Die Beispiele verfügen aufgrund ihres Gehaltes an Hochquarz-Mischkristall als vorherrschender Kristallphase über die gewünschten sehr niedrigen Werte der thermischen Ausdehnung, gemessen im Temperaturbereich zwischen Raumtemperatur und 700°C. Die für die Erfindung charakteristischen Werte für die Transmission bei den verschiedenen Wellenlängen, sowie für die Lichttransmission, gleichbedeutend mit "brightness" Y, sind in der Tabelle aufgeführt. Die Werte wurden an polierten Platten mit der für Kochflächen typischen Dicke von 4 mm bestimmt. Die optischen Messungen erfolgten mit Normlicht C, 2 Grad.

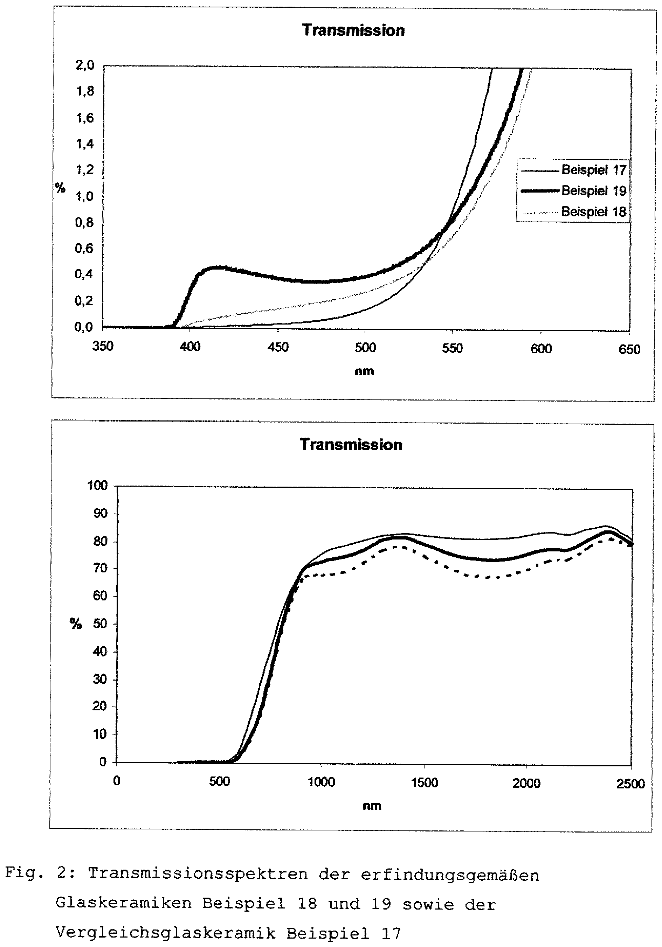

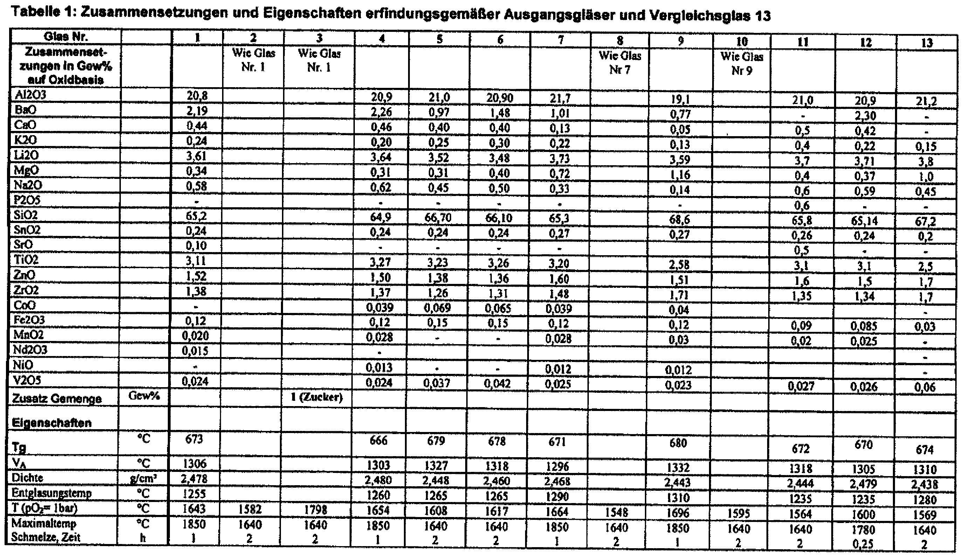

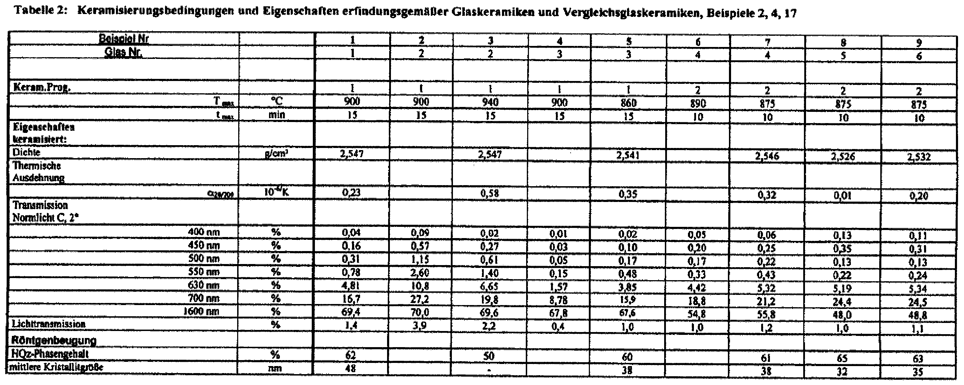

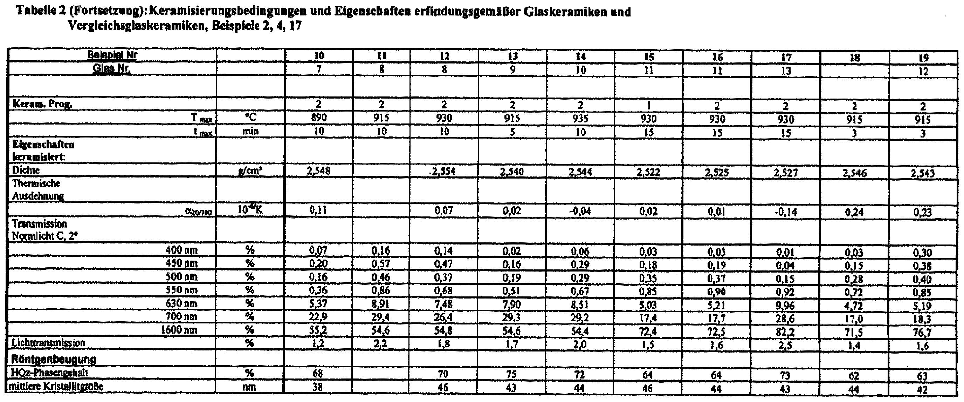

Bei einem zusätzlichen Beispiel Nr. 18 wurde eine Zusammensetzung gemäß Glas Nr. 1 großtechnisch erschmolzen und durch Hochtemperaturläuterung bei ca. 1770°C, 15 min wurde eine Temperatur für den Gleichgewichts-Sauerstoff-partialdruck pO₂ = 1 bar von 1610°C eingestellt. Die Blasenqualität dieses Glases war hervorragend und betrug < 3 Blasen/kg Glas. Es wurde bei der Formgebung ein genopptes Glasband von 4 mm Dicke hergestellt und zur Vermeidung von Spannung in einem Kühlofen abgekühlt. Aus diesem Glasband wurden Kochflächen der Größe 500 x 500 x 4 mm geschnitten und in einem großtechnischen Rollenofen keramisiert. Das Keramisierungsprogramm entsprach Programm 2 (Tabelle 2) und die kristallisierbaren Glasplatten befanden sich auf einer keramischen ebenen Unterlagsplatte. Die erhaltenen Glaskeramiken verfügten über eine sehr gute Ebenheit von < 0,1 % in ihren Diagonalabmessungen. Die Transmissionskurve dieser erfindungsgemäßen Glaskeramik ist in Fig. 2, der Vergleichsglaskeramik von Beispiel 17 und dem erfindungsgemäßen Beispiel 19 gegenübergestellt. In dem für die Erfindung wesentlichen Wellenlängenbereich im sichtbaren Licht von 400 bis 600 nm zeigt sich der für die höhere Anzeigefähigkeit vorteilhafte Transmissionsverlauf der erfindungsgemäßen Glaskeramik bei Werten oberhalb 0,1 % und die gute UV-Blockung unterhalb 350nm.

## Patentansprüche

1. Transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, keines der chemischen Läutermittel Arsenoxid und Antimonoxid enthält, wobei die Zusammensetzung der Glaskeramik (in Gew.-% auf Oxidbasis) im Wesentlichen besteht aus
| | |
|---|---|
| Li₂O | 3,0 - 4, 2 |
| ∑ Na₂O+K₂O | 0,2 - 1,5 |
| MgO | 0 - 1,5 |
| ∑ CaO+SrO+BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2,5 - 4 |
| ZrO₂ | 0,5 - 2 |
| P₂O₅ | 0 - 3 |
| SnO₂ | 0,1 - < 0,6 |
| ∑ TiO₂+ZrO₂+SnO₂ | 3,8 - 6 |
| V₂O₅ | 0,01 - 0,06 |
| Fe₂O₃ | 0,03 - 0,2 |
mit der Bedingung:
1 < Fe₂O₃ / V₂O₅ < 8,
**gekennzeichnet durch** Transmissionswerte von größer als 0,1 % im Bereich des sichtbaren Lichtes im gesamten Wellenlängenbereich größer als 450 nm, eine Lichttransmission im Sichtbaren von 0,8 - 2,5 % und eine Transmission im Infraroten bei 1600 nm von 45 - 85 %.

2. Kochfläche nach Anspruch 1, **gekennzeichnet durch** Transmissionswerte von:
> 0,15 % bei 450 nm
> 0,15 % bei 500 nm
> 0,25 % bei 550 nm
3 - 9 % bei 630 nm
50 - 80 % bei 1600 nm
und eine Lichttransmission im Sichtbaren von 1,0 - 2,0 %.

3. Kochfläche nach wenigstens einem der vorhergehenden Ansprüche 1 bis 2, **gekennzeichnet durch** eine schnelle Keramisierbarkeit des Ausgangsglases und eine Zusammensetzung der Glaskeramik, die in Gew.-% auf Oxidbasis im Wesentlichen besteht aus
| | |
|---|---|
| Li₂O | 3,2 - 4,2 |
| Na₂O | 0,1 - 1 |
| K₂O | 0,1 - 1 |
| ∑ Na₂O+K₂O | 0,2 - 1,5 |
| MgO | 0 - 1,5 |
| ∑ CaO+SrO+BaO | 0,1 - 4 |
| ZnO | 0 - 2 |
| B₂O₃ | 0 - 1 |
| Al₂O₃ | 19 - 23 |
| SiO₂ | 60 - 68 |
| TiO₂ | 2,8 - 4 |
| ZrO₂ | 0,8 - 1,8 |
| P₂O₅ | 0 - 1,5 |
| SnO₂ | 0,1 - < 0,6 |
| ∑ TiO₂+ZrO₂+SnO₂ | 4,4 - 6 |
| V₂O₅ | 0,01 - 0,05 |
| Fe₂O₃ | 0,07 - 0,18 |
mit der Bedingung:
2 < Fe₂O₃ / V₂O₅ < 6.

4. Kochfläche nach wenigstens einem der vorhergehenden Ansprüche 1 bis 3, **gekennzeichnet durch** eine Zusammensetzung der Glaskeramik, die in Gew.-% auf Oxidbasis enthält:
| | |
|---|---|
| CaO | 0,2 - 1 |
| SrO | 0,1 - 1. |

5. Kochfläche nach wenigstens einem der vorhergehenden Ansprüche 1 bis 2, **gekennzeichnet durch** gute Schmelzbarkeit und Entglasungsfestigkeit des kristallisierbaren Ausgangsglases mit einer Verarbeitungstemperatur V_{A} kleiner als 1320°C, einer oberen Entglasungsgrenze mindestens 30°C unter V_{A} und mit einer Zusammensetzung der Glaskeramik, in Gew.-% auf Oxidbasis von:
| | |
|---|---|
| Li₂O | 3,2 - 4,0 |
| Na₂O | 0,2 - 1 |
| K₂O | 0,1 - 1 |
| ∑ Na₂O+K₂O | 0,4 - 1,2 |
| MgO | 0,1 - 1,2 |
| CaO | 0,2 - 1 |
| SrO | 0 - 1 |
| BaO | 0 - 3 |
| ∑ CaO+SrO+BaO | 0,2 - 4 |
| ZnO | 0 - 1,8 |
| B₂O₃ | 0 - 1 |
| Al₂O₃ | 19 - 22 |
| SiO₂ | 62 - 67 |
| TiO₂ | 2,8 - 4 |
| ZrO₂ | 0,5 - 1,6 |
| P₂O₅ | 0 - 1,5 |
| SnO₂ | 0,1 - 0,5 |
| ∑ TiO₂+ZrO₂+SnO₂ | 4,2 - 6 |
| V₂O₅ | 0,01 - 0,05 |
| Fe₂O₃ | 0,08 - 0,15 |
mit der Bedingung:
2 < Fe₂O₃ / V₂O₅ < 6.

6. Kochfläche nach wenigstens einem der vorhergehenden Ansprüche 1 bis 5, **dadurch gekennzeichnet, dass** anstelle oder in Ergänzung zu den üblichen roten Anzeigen eine oder mehrere andersfarbige Anzeigen, wie blaue, grüne, gelbe, orange oder weiße eingesetzt sind.

7. Verfahren zur Herstellung einer transparenten, eingefärbten Kochfläche mit verbesserter farbiger Anzeigefähigkeit bestehend aus einer Glaskeramik mit Hochquarz-Mischkristallen als vorherrschender Kristallphase, **dadurch gekennzeichnet, dass** bis auf unvermeidliche Spuren, auf die chemischen Läutermittel Arsenoxid und Antimonoxid verzichtet und die Kochfläche auf Transmissionswerte von größer als 0,1 % im Bereich des sichtbaren Lichtes im gesamten Wellenlängenbereich von größer als 450 nm, eine Lichttransmission im Sichtbaren von 0,8 - 2,5 % und eine Transmission im Infraroten bei 1600 nm von 45 - 85 % und wobei ein Gleichgewichts-Sauerstoffpartialdruck pO₂ der Glaskeramik bzw. des kristallisierbaren Ausgangsglases von 1 bar bei einer Temperatur größer 1580°C, bevorzugt größer 1640°C eingestellt wird
wobei eine Zusammensetzung der Glaskeramik in Gew.-% auf Oxidbasis verwendet wird, die im Wesentlichen besteht aus:
| | |
|---|---|
| Li₂O | 3,0 - 4,2 |
| ∑ Na₂O+K₂O | 0,2 - 1,5 |
| MgO | 0 - 1,5 |
| ∑ CaO+SrO+BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2,5 - 4 |
| ZrO₂ | 0,5 - 2 |
| P₂O₅ | 0 - 3 |
| SnO₂ | 0,1 - < 0,6 |
| ∑ TiO₂+ErO₂+SnO₂ | 3,8 - 6 |
| V₂O₅ | 0,01 - 0,06 |
| Fe₂O₃ | 0,03 - 0,2 |
wobei die Bedingung: 1 < Fe₂O₃ / V₂O₅ < 8 gilt.

8. Verfahren zur Herstellung einer Kochfläche nach Anspruch 7, **dadurch gekennzeichnet, dass** Transmissionswerte von
> 0,15 % bei 450 nm
> 0,15 % bei 500 nm
> 0,25 % bei 550 nm
3 - 9 % bei 630 nm
50 - 80 % bei 1600 nm
und eine Lichttransmission im Sichtbaren von 1,0 - 2,0 %
eingestellt werden.

9. Verfahren zur Herstellung einer Kochfläche nach wenigstens einem der vorhergehenden Ansprüche 7 oder 8, **gekennzeichnet durch** eine schnelle Keramisierbarkeit des kristallisierbaren Ausgangsglases, wobei eine Zusammensetzung in Gew.-% auf Oxidbasis verwendet wird, die im wesentlichen besteht aus:
| | |
|---|---|
| Li₂O | 3,2 - 4,2 |
| Na₂O | 0,1 - 1 |
| K₂O | 0,1 - 1 |
| ∑ Na₂O+K₂O | 0,2 - 1,5 |
| MgO | 0 - 1,5 |
| ∑ CaO+SrO+BaO | 0,1 - 4 |
| ZnO | 0 - 2 |
| B₂O₃ | 0 - 1 |
| Al₂O₃ | 19 - 23 |
| SiO₂ | 60 - 68 |
| TiO₂ | 2,8 - 4 |
| ZrO₂ | 0,8 - 1,8 |
| P₂O₅ | 0 - 1,5 |
| SnO₂ | 0,1 - < 0,6 |
| ∑ TiO₂+ZrO₂+SnO₂ | 4,4 - 6 |
| V₂O₅ | 0,01 - 0,05 |
| Fe₂O₃ | 0,07 - 0,18 |
wobei die Bedingung: 2 < Fe₂O₃ / V₂O₅ < 6 eingestellt wird.

10. Verfahren zur Herstellung einer Kochfläche mit schneller Keramisierung des kristallisierbaren Ausgangsglases nach Anspruch 9, mit einer Gesamtdauer von weniger als 2 Stunden, bevorzugt weniger als 80 Minuten, **dadurch gekennzeichnet, dass** die Keramisierung mit folgendem Programm vorgenommen wird:
a) Erhöhen der Temperatur des kristallisierbaren Glases auf den Temperaturbereich von etwa 680°C innerhalb von 3 - 30 Minuten;
b) Erhöhen der Temperatur des kristallisierbaren Glases innerhalb des Temperaturbereichs der Keimbildung von 680 bis 800°C über einen Zeitraum von etwa 10 bis 30 Minuten;
c) Erhöhen der Temperatur des Kristallisationskeime enthaltenden Glases innerhalb von 5 bis 30 Minuten Dauer ir. den Temperaturbereich hoher Kristallwachstunsgeschwindigkeit von 850 bis 950°C;
d) Halten innerhalb des Temperaturbereiches bei der maximalen Temperatur von 850 bis 950°C bis zu 20 Minuten um Kristalle des Typs Hochquarz-Mischkristalle auf den Kristallisationskeimen wachsen zu lassen und danach;
e) rasches Abkühlen der erhaltenen Glaskeramik auf Raumtemperatur.

11. Verfahren zur Herstellung einer Kochfläche nach wenigstens einem der vorhergehenden Ansprüche 7 bis 10, **dadurch gekennzeichnet, dass** eine Zusammentzung verwendet wird, die in Gew.-% auf Oxidbasis enthält:
| | |
|---|---|
| CaO | 0,2 - 1 |
| SrO | 0,1 - 1. |

12. Verfahren zur Herstellung einer Kochfläche nach mindestens einem der vorhergehenden Ansprüche 7 bis 8, **gekennzeichnet durch** gute Schmelzbarkeit und Entglasungsfestigkeit des kristallisierbaren Ausgangsglases, mit einer Verarbeitungstemperatur V_{A} kleiner als 1320°C, einer oberen Entglasungsgrenze wenigstens 30° unter V_{A}, wobei eine Zusammensetzung in Gew.-% auf Oxidbasis von
| | |
|---|---|
| Li₂O | 3,2 - 4,0 |
| Na₂O | 0,2 - 1 |
| K₂O | 0,1 - 1 |
| ∑ Na₂O+K₂O | 0,4 - 1,2 |
| MgO | 0,1 - 1,2 |
| CaO | 0,2 - 1 |
| SrO | 0 - 1 |
| BaO | 0 - 3 |
| ∑ CaO+SrO+BaO | 0,2 - 4 |
| ZnO | 0 - 1,8 |
| B₂O₃ | 0 - 1 |
| Al₂O₃ | 19 - 22 |
| SiO₂ | 62 - 67 |
| TiO₂ | 2,8 - 4 |
| ZrO₂ | 0,5 - 1,6 |
| P₂O₅ | 0 - 1,5 |
| SnO₂ | 0,1 - 0,5 |
| ∑ TiO₂+ZrO₂+SnO₂ | 4,2 - 6 |
| V₂O₅ | 0,01 - 0,05 |
| Fe₂O₃ | 0,08 - 0,15 |
mit der Bedingung:
2 < Fe₂O₃ / V₂O₅ < 6
verwendet wird.

13. Verfahren zur Herstellung einer Kochfläche nach Anspruch 12, **dadurch gekennzeichnet, dass** der Gleichgewichts-Sauerstoffpartialdruck durch eine Temperatur der Glasschmelze von größer als 1700°C, bevorzugt größer als 1750°C eingestellt wird.

14. Verfahren nach Anspruch 13, **dadurch gekennzeichnet, dass** ein V₂O₅-Gehalt von weniger als 0,04 bevorzugt weniger als 0,03 Gew.-% verwendet wird.

15. Verfahren zur Herstellung einer Kochfläche nach mindestens einem der vorhergehenden Ansprüche 7 bis 14, **dadurch gekennzeichnet, dass** durch eine Temperatur der Glasschmelze von größer als 1700°C, bevorzugt größer als 1750°C eine Blasenzahl von weniger als 5 Blasen/kg Glas erreicht wird und dass der Fe₂O₃-Gehalt wenigstens 20 Gew% des SnO₂-Gehaltes beträgt.

16. Verfahren zur Herstellung einer Kochflächen nach mindestens einem der vorhergehenden Ansprüche 7 bis 15, **dadurch gekennzeichnet, dass** anstelle oder in Ergänzung zu den üblichen roten Anzeigen eine oder mehrere andersfarbige Anzeigen, wie blaue, grüne, gelbe, orange oder weiße eingesetzt werden.

## Claims

1. A transparent, dyed cooktop with improved colour indication capability, made of a glass ceramic with high quartz solid solution as the predominant crystal phase, wherein the glass ceramic does not contain any of the chemical refining agents arsenic oxide and antimony oxide except for unavoidable traces, wherein the composition of the glass ceramic (in wt% on an oxide basis) substantially consists of
| | |
|---|---|
| Li₂O | 3.0 - 4.2 |
| ∑ Na₂O+K₂O | 0.2 - 1.5 |
| MgO | 0 - 1.5 |
| ∑ CaO+SrO+BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2.5 - 4 |
| ZrO₂ | 0.5 - 2 |
| P₂O₅ | 0 - 3 |
| SnO₂ | 0.1 - < 0.6 |
| ∑ TiO₂+ZrO₂+SnO₂ | 3.8 - 6 |
| V₂O₅ | 0.01 - 0.06 |
| Fe₂O₃ | 0.03 - 0.2; |
under the condition:
1 < Fe₂O₃ / V₂O₅ < 8;
**characterised by** transmittance values of greater than 0.1 % within the range of visible light in the entire wavelength range greater than 450 nm, a light transmittance in the visible from 0.8 to 2.5 %, and a transmittance in the infrared at 1600 nm from 45 to 85 %.

2. The cooktop of claim 1, **characterised by** transmittance values of:
> 0.15 % at 450 nm
> 0.15 % at 500 nm
> 0.25 % at 550 nm
3 - 9 % at 630 nm
50 - 80 % at 1600 nm
and a light transmittance in the visible from 1.0 to 2.0 %.

3. The cooktop according to at least one of the preceding claims 1 to 2, **characterised by** rapid ceramizability of the starting glass and a composition of the glass ceramic, in wt% on an oxide basis, consisting substantially of
| | |
|---|---|
| Li₂O | 3.2 - 4.2 |
| Na₂O | 0.1 - 1 |
| K₂O | 0.1 - 1 |
| ∑ Na₂O+K₂O | 0.2 - 1.5 |
| MgO | 0 - 1.5 |
| ∑ CaO+SrO+BaO | 0.1 - 4 |
| ZnO | 0 - 2 |
| B₂O₃ | 0 - 1 |
| Al₂O₃ | 19 - 23 |
| SiO₂ | 60 - 68 |
| TiO₂ | 2.8 - 4 |
| ZrO₂ | 0.8 - 1.8 |
| P₂O₅ | 0 - 1.5 |
| SnO₂ | 0.1 - < 0.6 |
| ∑ TiO₂+ZrO₂+SnO₂ | 4.4 - 6 |
| V₂O₅ | 0.01 - 0.05 |
| Fe₂O₃ | 0.07 - 0.18; |
under the condition:
2 < Fe₂O₃ / V₂O₅ < 6.

4. The cooktop according to at least one of the preceding claims 1 to 3, **characterised by** a composition of the glass ceramic containing, in wt% on an oxide basis:
| | |
|---|---|
| CaO | 0.2 - 1 |
| SrO | 0.1 - 1. |

5. The cooktop according to at least one of the preceding claims 1 to 2, **characterised by** good meltability and devitrification resistance of the crystallisable starting glass, with a working point V_{A} of less than 1320 °C, an upper devitrification limit of at least 30 °C below V_{A}, and with a composition of the glass ceramic, in wt% on an oxide basis, of:
| | |
|---|---|
| Li₂O | 3.2 - 4.0 |
| Na₂O | 0.2 - 1 |
| K₂O | 0.1 - 1 |
| ∑ NB₂O+K₂O | 0.4 - 1.2 |
| MgO | 0.1 - 1.2 |
| CaO | 0.2 - 1 |
| SrO | 0 - 1 |
| BaO | 0 - 3 |
| ∑ CaO+SrO+BaO | 0.2 - 4 |
| ZnO | 0 - 1.8 |
| B₂O₃ | 0 - 1 |
| Al₂O₃ | 19 - 22 |
| SiO₂ | 62 - 67 |
| TiO₂ | 2.8 - 4 |
| ZrO₂ | 0.5 - 1.6 |
| P₂O₅ | 0 - 1.5 |
| SnO₂ | 0.1 - 0.5 |
| ∑ TiO₂+ZrO₂+SnO₂ | 4.2 - 6 |
| V₂O₅ | 0.01 - 0.05 |
| Fe₂O₃ | 0.08 - 0.15; |
under the condition:
2 < Fe₂O₃ / V₂O₅ < 6.

6. The cooktop according to at least one of the preceding claims 1 to 5, **characterised in that** instead of or in addition to the usual red indicators, one or more differently coloured indicators are utilized, such as blue, green, yellow, orange, or white ones.

7. A method for producing a transparent, dyed cooktop with improved colour indication capability, made of a glass ceramic with high quartz solid solution as the predominant crystal phase, **characterised in that** the chemical refining agents arsenic oxide and antimony oxide are dispensed with except for unavoidable traces, and that the cooktop is adjusted to exhibit transmittance values of greater than 0.1 % in the range of visible light within the entire wavelength range of greater than 450 nm, a light transmittance in the visible from 0.8 to 2.5 %, and a transmittance in the infrared at 1600 nm from 45 to 85 %, and wherein an equilibrium oxygen partial pressure pO₂ of the glass ceramic or of the crystallisable starting glass is adjusted to be 1 bar at a temperature greater than 1580 °C, preferably greater than 1640 °C, wherein a composition of the glass ceramic, in wt% on an oxide basis, is used, which essentially consists of:
| | |
|---|---|
| Li₂O | 3.0 - 4.2 |
| ∑ Na₂O+K₂O | 0.2 - 1.5 |
| MgO | 0 - 1.5 |
| ∑ CaO+SrO+BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2.5 - 4 |
| ZrO₂ | 0.5 - 2 |
| P₂O₅ | 0 - 3 |
| SnO₂ | 0.1 - < 0.6 |
| ∑ TiO₂+ZrO₂+SnO₂ | 3.8 - 6 |
| V₂O₅ | 0.01 - 0.06 |
| Fe₂O₃ | 0.03 - 0.2; |
while the condition 1 < Fe₂O₃ / V₂O₅ < 8 applies.

8. The method for producing a cooktop according to claim 7, **characterised in that** transmittance values are adjusted to
> 0.15 % at 450 nm,
> 0.15 % at 500 nm,
> 0.25 % at 550 nm,
3 - 9 % at 630 nm,
50 - 80 % at 1600 nm,
and a light transmittance in the visible is adjusted to be from 1.0 to 2.0 %.

9. The method for producing a cooktop according to at least one of the preceding claims 7 or 8, **characterised by** rapid ceramizability of the crystallisable starting glass, wherein a composition, in wt% on an oxide basis, is used, which substantially consists of:
| | |
|---|---|
| Li₂O | 3.2 - 4.2 |
| Na₂O | 0.1 - 1 |
| K₂O | 0.1 - 1 |
| ∑ Na₂O+K₂O | 0.2 - 1.5 |
| MgO | 0 - 1.5 |
| ∑ CaO+SrO+BaO | 0.1 - 4 |
| ZnO | 0 - 2 |
| B₂O₃ | 0 - 1 |
| Al₂O₃ | 19 - 23 |
| SiO₂ | 60 - 68 |
| TiO₂ | 2.8 - 4 |
| ZrO₂ | 0.8 - 1.8 |
| P₂O₅ | 0 - 1.5 |
| SnO₂ | 0.1 - < 0.6 |
| ∑ TiO₂+ZrO₂+SnO₂ | 4.4 - 6 |
| V₂O₅ | 0.01 - 0.05 |
| Fe₂O₃ | 0.07 - 0.18; |
adjusted such that the condition 2 < Fe₂O₃ / V₂O₅ < 6 applies.

10. The method for producing a cooktop with rapid ceramization of the crystallisable starting glass according to claim 9, with a total duration of less than 2 hours, preferably less than 80 minutes, **characterised in that** the ceramization is carried out with the following program:
a) raising the temperature of the crystallisable glass to the temperature range of about 680 °C within 3 - 30 minutes;
b) increasing the temperature of the crystallisable glass within the temperature range of nucleation from 680 to 800 °C over a time of about 10 to 30 minutes;
c) increasing the temperature of the glass that contains crystallisation nuclei within 5 to 30 minutes to the temperature range of a high crystal growth rate from 850 to 950 °C;
d) holding within the temperature range at the maximum temperature from 850 to 950 °C for up to 20 minutes to allow crystals of the high quartz solid solution type to grow on the crystallisation nuclei; and thereafter;
e) rapid cooling of the resulting glass ceramic to room temperature.

11. The method for producing a cooktop according to at least one of the preceding claims 7 to 10, **characterised in that** a composition is used, containing, in wt% on an oxide basis:
| | |
|---|---|
| CaO | 0.2 - 1 |
| SrO | 0.1 - 1. |

12. The method for producing a cooktop according to at least one of the preceding claims 7 to 8, characterised good meltability and devitrification resistance of the crystallisable starting glass, with a working point V_{A} of less than 1320 °C, an upper devitrification limit of at least 30 °C below V_{A}, wherein a composition is used containing, in wt% on an oxide basis:
| | |
|---|---|
| Li₂O | 3.2 - 4.0 |
| Na₂O | 0.2 - 1 |
| K₂O | 0.1 - 1 |
| ∑ Na₂O+K₂O | 0.4 - 1.2 |
| MgO | 0.1 - 1.2 |
| CaO | 0.2 - 1 |
| SrO | 0 - 1 |
| BaO | 0 - 3 |
| ∑ CaO+SrO+BaO | 0.2 - 4 |
| ZnO | 0 - 1.8 |
| B₂O₃ | 0 - 1 |
| Al₂O₃ | 19 - 22 |
| SiO₂ | 62 - 67 |
| TiO₂ | 2.8 - 4 |
| ZrO₂ | 0.5 - 1.6 |
| P₂O₅ | 0 - 1.5 |
| SnO₂ | 0.1 - 0.5 |
| ∑ TiO₂+ZrO₂+SnO₂ | 4.2 - 6 |
| V₂O₅ | 0.01 - 0.05 |
| Fe₂O₃ | 0.08 - 0.15; |
under the condition:
2 < Fe₂O₃ / V₂O₅ < 6.

13. The method for producing a cooktop according to claim 12, **characterised in that** the equilibrium oxygen partial pressure is adjusted via a temperature of the molten glass of greater than 1700 °C, preferably greater than 1750 °C.

14. The method according to claim 13, **characterised in that** a V₂O₅ content of less than 0.04, preferably less than 0.03 wt% is used.

15. The method for producing a cooktop according to at least one of the preceding claims 7 to 14, **characterised in that** a number of bubbles of less than 5 bubbles per kg glass is achieved by a temperature of the molten glass of greater than 1700 °C, preferably greater than 1750 °C, and that the Fe₂O₃ content is at least 20 wt% of the SnO₂ content.

16. The method for producing a cooktop according to at least one of the preceding claims 7 to 15, **characterised in that** instead of or in addition to the usual red indicators, one or more differently coloured indicators are utilized, such as blue, green, yellow, orange, or white ones.

## Revendications

1. Surface de cuisson transparente et colorée dans la masse, dotée d'une capacité d'affichage en couleur améliorée, constituée d'une vitrocéramique comprenant, en tant que phase cristalline prédominante, des cristaux mixtes de quartz bêta, laquelle vitrocéramique ne contient pas, mises à part les traces inévitables, de ces agents chimiques d'affinage que sont l'oxyde d'arsenic et l'oxyde d'antimoine, et laquelle vitrocéramique présente pour l'essentiel la composition suivante, exprimée en pourcentages pondéraux rapportés aux oxydes :
| | |
|---|---|
| Li₂O | 3,0 - 4,2 |
| ∑ Na₂O + K₂O | 0,2 - 1,5 |
| MgO | 0 - 1,5 |
| ∑ CaO + SrO + BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2,5 - 4 |
| ZrO₂ | 0,5 - 2 |
| P₂O₅ | 0 - 3 |
| SnO₂ | 0,1 - < 0,6 |
| ∑ TiO₂ + ZrO₂ + SnO₂ | 3,8 - 6 |
| V₂O₅ | 0,01 - 0,06 |
| Fe₂O₃ | 0,03 - 0,2 |
sous réserve que 1 < Fe₂O₃ / V₂O₅ < 8,
**caractérisée par** des valeurs de transmission de plus de 0,1 % dans le domaine de la lumière visible dans tout le domaine des longueurs d'onde supérieures à 450 nm, une transmission de la lumière dans le domaine visible de 0,8 à 2,5 %, et une transmission dans l'infra-rouge, à 1600 nm, de 45 à 85 %.

2. Surface de cuisson conforme à la revendication 1, **caractérisée par** les valeurs suivantes de transmission :
> 0,15 % à 450 nm,
> 0,15 % à 500 nm,
> 0,25 % à 550 nm,
3 - 9 % à 630 nm,
50 - 80 % à 1600 nm,
et par une transmission de la lumière dans le domaine visible de 1,0 à 2,0 %.

3. Surface de cuisson conforme à au moins l'une des revendications précédentes 1 et 2, **caractérisée par** une aptitude à une céramisation rapide du verre de départ et par une composition de la vitrocéramique qui est pour l'essentiel la suivante, exprimée en pourcentages pondéraux rapportés aux oxydes :
| | |
|---|---|
| Li₂O | 3,2 - 4,2 |
| Na₂O | 0,1 - 1 |
| K₂O | 0,1 - 1 |
| ∑ Na₂O + K₂O | 0,2 - 1,5 |
| MgO | 0 - 1,5 |
| ∑ CaO + SrO + BaO | 0,1 - 4 |
| ZnO | 0 - 2 |
| B₂O₃ | 0 - 1 |
| Al₂O₃ | 19 - 23 |
| SiO₂ | 60 - 68 |
| TiO₂ | 2,8 - 4 |
| ZrO₂ | 0,8 - 1,8 |
| P₂O₅ | 0 - 1,5 |
| SnO₂ | 0,1 - < 0,6 |
| ∑ TiO₂ + ZrO₂ + SnO₂ | 4,4 - 6 |
| V₂O₅ | 0,01 - 0,05 |
| Fe₂O₃ | 0,07 - 0,18 |
sous réserve que 2 < Fe₂O₃ / V₂O₅ < 6.

4. Surface de cuisson conforme à au moins l'une des revendications précédentes 1 à 3, **caractérisée par** une vitrocéramique dont la composition comprend, en pourcentages pondéraux rapportés aux oxydes :
| | |
|---|---|
| CaO | 0,2 - 1 |
| SrO | 0,1 - 1. |

5. Surface de cuisson conforme à au moins l'une des revendications précédentes 1 et 2, **caractérisée par** une bonne fusibilité et une bonne résistance à la dévitrification du verre cristallisable de départ, lequel présente une température de traitement V_{A} inférieure à 1320 °C, une limite supérieure de dévitrification inférieure d'au moins 30 °C à V_{A}, et par une vitrocéramique qui présente la composition suivante, exprimée en pourcentages pondéraux rapportés aux oxydes :
| | |
|---|---|
| Li₂O | 3,2 - 4,0 |
| Na₂O | 0,2 - 1 |
| K₂O | 0,1 - 1 |
| ∑ Na₂O + K₂O | 0,4 - 1,2 |
| MgO | 0,1 - 1,2 |
| CaO | 0,2 - 1 |
| SrO | 0 - 1 |
| BaO | 0 - 3 |
| ∑ CaO + SrO + BaO | 0,2 - 4 |
| ZnO | 0 - 1,8 |
| B₂O₃ | 0 - 1 |
| Al₂O₃ | 19 - 22 |
| SiO₂ | 62 - 67 |
| TiO₂ | 2,8 - 4 |
| ZrO₂ | 0,5 - 1,6 |
| P₂O₅ | 0 - 1,5 |
| SnO₂ | 0,1 - 0,5 |
| ∑ TiO₂ + ZrO₂ + SnO₂ | 4,2 - 6 |
| V₂O₅ | 0,01 - 0,05 |
| Fe₂O₃ | 0,08 - 0,15 |
sous réserve que 2 < Fe₂O₃ / V₂O₅ < 6.

6. Surface de cuisson conforme à au moins l'une des revendications précédentes 1 à 5, **caractérisée en ce que**, au lieu ou en complément des habituels affichages en rouge, il y a des affichages en une ou plusieurs autre(s) couleur(s), comme bleu, vert, jaune, orange ou blanc.

7. Procédé de fabrication d'une surface de cuisson transparente et colorée dans la masse, dotée d'une capacité d'affichage en couleur améliorée, constituée d'une vitrocéramique comprenant, en tant que phase cristalline prédominante, des cristaux mixtes de quartz bêta, **caractérisé en ce que**, mises à part les traces inévitables, on renonce aux agents chimiques d'affinage que sont l'oxyde d'arsenic et l'oxyde d'antimoine et **en ce que** la surface de cuisson est ajustée à des valeurs de transmission de plus de 0,1 % dans le domaine de la lumière visible dans tout le domaine des longueurs d'onde supérieures à 450 nm, à une transmission de la lumière dans le domaine visible de 0,8 à 2,5 %, et à une transmission dans l'infra-rouge, à 1600 nm, de 45 à 85 %, dans lequel procédé la pression partielle d'oxygène à l'équilibre, pO₂, de la vitrocéramique ou du verre cristallisable de départ est ajustée à 1 bar à une température supérieure à 1580 °C et de préférence supérieure à 1640 °C, et dans lequel procédé l'on utilise une composition de vitrocéramique constituée pour l'essentiel, en pourcentages pondéraux rapportés aux oxydes, des composants suivants :
| | |
|---|---|
| Li₂O | 3,0 - 4,2 |
| ∑ Na₂O + K₂O | 0,2 - 1,5 |
| MgO | 0 - 1,5 |
| ∑ CaO + SrO + BaO | 0 - 4 |
| ZnO | 0 - 2 |
| B₂O₃ | 0 - 2 |
| Al₂O₃ | 19 - 23 |
| SiO₂ | 60 - 69 |
| TiO₂ | 2,5 - 4 |
| ZrO₂ | 0,5 - 2 |
| P₂O₅ | 0 - 3 |
| SnO₂ | 0,1 - < 0,6 |
| ∑ TiO₂ + ZrO₂ + SnO₂ | 3,8 - 6 |
| V₂O₅ | 0,01 - 0,06 |
| Fe₂O₃ | 0,03 - 0,2 |
dans laquelle est respectée la condition 1 < Fe₂O₃ / V₂O₅ < 8.

8. Procédé de fabrication d'une surface de cuisson, conforme à la revendication 7, **caractérisée en ce que** la transmission est ajustée à des valeurs
- de plus de 0,15 % à 450 nm,
- de plus de 0,15 % à 500 nm,
- de plus de 0,25 % à 550 nm,
- de 3 à 9 % à 630 nm,
- de 50 à 80 % à 1600 nm,
et la transmission de la lumière dans le domaine visible, à une valeur de 1,0 à 2,0 %.

9. Procédé de fabrication d'une surface de cuisson, conforme à au moins l'une des revendications précédentes 7 et 8, **caractérisé par** une aptitude à une céramisation rapide du verre cristallisable de départ, dans lequel on utilise une composition de vitrocéramique constituée pour l'essentiel, en pourcentages pondéraux rapportés aux oxydes, des composants suivants :
| | |
|---|---|
| Li₂O | 3,2 - 4,2 |
| Na₂O | 0,1 - 1 |
| K₂O | 0,1 - 1 |
| ∑ Na₂O + K₂O | 0,2 - 1,5 |
| MgO | 0 - 1,5 |
| ∑ CaO + SrO + BaO | 0,1 - 4 |
| ZnO | 0 - 2 |
| B₂O₃ | 0 - 1 |
| Al₂O₃ | 19 - 23 |
| SiO₂ | 60 - 68 |
| TiO₂ | 2,8 - 4 |
| ZrO₂ | 0,8 - 1,8 |
| P₂O₅ | 0 - 1,5 |
| SnO₂ | 0,1 - < 0,6 |
| ∑ TiO₂ + ZrO₂ + SnO₂ | 4,4 - 6 |
| V₂O₅ | 0,01 - 0,05 |
| Fe₂O₃ | 0,07 - 0,18 |
dans laquelle est respectée la condition 2 < Fe₂O₃/ V₂O₅ < 6.

10. Procédé de fabrication d'une surface de cuisson où le verre cristallisable de départ est apte à une céramisation rapide, conforme à la revendication 9, d'une durée totale de moins de 2 heures et de préférence de moins de 80 minutes, **caractérisé en ce que** la céramisation est réalisée selon le programme suivant :
a) hausse de la température du verre cristallisable, jusqu'au domaine de température d'à peu près 680 °C, en un laps de temps de 3 à 30 minutes,
b) hausse de la température du verre cristallisable, dans le domaine de température de formation de germes, de 680 à 800 °C, en un laps de temps d'environ 10 à 30 minutes,
c) hausse de la température du verre contenant des germes de cristallisation, en un laps de temps de 5 à 30 minutes, dans le domaine de température, de 850 à 950 °C, où la vitesse de croissance des cristaux est grande,
d) maintien dans ce domaine de température, à la température maximale valant de 850 à 950 °C, durant jusqu'à 20 minutes, pour laisser croître des cristaux du type cristaux mixtes de quartz bêta sur les germes de cristallisation,
e) et ensuite, refroidissement rapide de la vitrocéramique obtenue, jusqu'à la température ambiante.

11. Procédé de fabrication d'une surface de cuisson, conforme à au moins l'une des revendications précédentes 7 à 10, **caractérisé en ce que** l'on utilise une composition qui contient, en pourcentages pondéraux rapportés aux oxydes :
| | |
|---|---|
| CaO | 0,2 - 1 |
| SrO | 0,1 - 1. |

12. Procédé de fabrication d'une surface de cuisson, conforme à au moins l'une des revendications précédentes 7 et 8, **caractérisé par** une bonne fusibilité et une bonne résistance à la dévitrification du verre cristallisable de départ, lequel présente une température de traitement V_{A} inférieure à 1320 °C, une limite supérieure de dévitrification inférieure d'au moins 30 °C à V_{A}, et dans lequel on utilise une composition qui comprend, en pourcentages pondéraux rapportés aux oxydes :
| | |
|---|---|
| Li₂O | 3,2 - 4,0 |
| Na₂O | 0,2 - 1 |
| K₂O | 0,1 - 1 |
| ∑ Na₂O + K₂O | 0,4 - 1,2 |
| MgO | 0,1 - 1,2 |
| CaO | 0,2 - 1 |
| SrO | 0 - 1 |
| BaO | 0 - 3 |
| ∑ CaO + SrO + BaO | 0,2 - 4 |
| ZnO | 0 - 1,8 |
| B₂O₃ | 0 - 1 |
| Al₂O₃ | 19 - 22 |
| SiO₂ | 62 - 67 |
| TiO₂ | 2,8 - 4 |
| ZrO₂ | 0,5 - 1,6 |
| P₂O₅ | 0 - 1,5 |
| SnO₂ | 0,1 - 0,5 |
| ∑ TiO₂ + ZrO₂ + SnO₂ | 4,2 - 6 |
| V₂O₅ | 0,01 - 0,05 |
| Fe₂O₃ | 0,08 - 0,15 |
et dans laquelle est respectée la condition 2 < Fe₂O₃ / V₂O₅ < 6.

13. Procédé de fabrication d'une surface de cuisson, conforme à la revendication 12, **caractérisé en ce que** l'on ajuste la pression partielle d'oxygène à l'équilibre en portant la masse de verre fondu à une température supérieure à 1700 °C, et de préférence supérieure à 1750 °C.

14. Procédé conforme à la revendication 13, **caractérisé en ce que** l'on utilise V₂O₅ en une proportion inférieure à 0,04 % en poids, et de préférence inférieure à 0,03 % en poids.

15. Procédé de fabrication d'une surface de cuisson, conforme à au moins l'une des revendications précédentes 7 à 14, **caractérisé en ce que**, en portant la masse de verre fondu à une température supérieure à 1700 °C, et de préférence supérieure à 1750 °C, on obtient que le nombre de bulles soit inférieur à 5 bulles par kilogramme de verre, et **en ce que** la teneur en Fe₂O₃ représente au moins 20 %, en poids, de la teneur en SnO₂.

16. Procédé de fabrication d'une surface de cuisson, conforme à au moins l'une des revendications précédentes 7 à 15, **caractérisé en ce qu'**on fait en sorte qu'il y ait, au lieu ou en complément des habituels affichages en rouge, des affichages en une ou plusieurs autre(s) couleur(s), comme bleu, vert, jaune, orange ou blanc.
